# EUROPEAN PATENT APPLICATION

(11) **EP 4 776 099 A1**
(43) Date of publication of application: **15.07.2026**
(21) Application number: 25765768.4
(22) Date of filing: 10.09.2025
(51) Int. Cl.: G06F 1/16, H02K 7/116, F16C 29/04

(54) **ELECTRONIC DEVICE INCLUDING GUIDE STRUCTURE OF DRIVING STRUCTURE**

(30) Priority: 10.09.2024 KR 20240123315; 04.11.2024 KR 20240154285; 14.03.2025 KR 20250033392
(71) Applicant: Samsung Electronics Co., Ltd., Suwon-si, Gyeonggi-do 16677 (KR)
(72) Inventor: KIM, Yonghwa, Suwon-si, Gyeonggi-do 16677 (KR); KANG, Hyunggwang, Suwon-si, Gyeonggi-do 16677 (KR); KIM, Yongyeon, Suwon-si, Gyeonggi-do 16677 (KR); YOO, Changhee, Suwon-si, Gyeonggi-do 16677 (KR); JEONG, Hoyoung, Suwon-si, Gyeonggi-do 16677 (KR); CHO, Hyoungtak, Suwon-si, Gyeonggi-do 16677 (KR); LEE, Soyoung, Suwon-si, Gyeonggi-do 16677 (KR); LEE, Jungwoo, Suwon-si, Gyeonggi-do 16677 (KR)
(74) Representative: HGF
(86) International application number: PCT/KR2025/014071
(87) International publication number: WO 2026/059303

(57) **Abstract**

An electronic device according to various embodiments disclosed in this document may include a flexible display, a first housing, and a second housing comprising a support plate, a first side, and a second side extending from both sides of the support plate. The electronic device may further include a first rail structure disposed on the first side of the second housing, and a sliding structure fixed to the first housing, coupled with the first rail structure, and configured to move, at least in part, with respect to the first rail structure in response to movement of the first housing with respect to the second housing. The electronic device may include a second rail structure disposed on a periphery of the second side of the support plate of the second housing and extending in the same direction as a movement direction of the first housing with respect to the second housing. The electronic device may further include a driving unit comprising a driving motor and a first gear connected to the driving motor and rotated by a driving force of the driving motor. The electronic device may include a guide member having a recess configured to accommodate the second rail structure, and a second gear directly engaged with the first gear so as to receive the driving force from the first gear and move linearly along the second rail structure, thereby moving the first housing with respect to the second housing. A bearing member may be disposed, at least in part, between the second rail structure and the second gear in the recess.

Other various embodiments may be possible.

## Description

### [Technical Field]

Various embodiments disclosed in this document relate to an electronic device including a guide structure of a driving structure.

### [Background Art]

Electronic devices are gradually becoming slimmer and being developed to increase the rigidity, strengthen the design aspect, and differentiate the functional elements. Electronic devices are gradually changing from a uniform rectangular shape to various shapes. Electronic devices may have a deformable structure that is convenient to carry and allows the use of a large-screen display. Electronic devices may include a rollable electronic device (e.g., a slidable electronic device) that can vary the display area of a flexible display (e.g., a rollable display) through the support of housings that operate in a manner of sliding relative to each other. Rollable electronic devices may require an efficient arrangement structure of a driving unit (e.g., a driving module) that can slide one housing with respect to the other housing.

The above information may be presented as background information only to assist with an understanding of the disclosure. No determination has been made, and no assertion is made, as to whether any of the above might be applicable as prior art with regard to the disclosure.

### [Disclosure of Invention]

### [Technical Problem]

An electronic device may include a rollable electronic device (e.g., a slidable electronic device) in which a display area of a flexible display (e.g., a rollable display, an expandable display, or a stretchable display) can be expanded and/or contracted depending on an operating state. The rollable electronic device may include a first housing and a second housing that are movably coupled with respect to each other in a manner that is at least partially fitted together. For example, the first housing and the second housing are slidably operable with respect to each other and support at least a part of the flexible display, such that the flexible display is induced to have a first display area in a slide-in state and to have a second display area larger than the first display area in a slide-out state.

The rollable electronic device may include, as a driving unit (e.g., a driving module), a driving motor that is disposed in one housing (e.g., the first housing or the second housing) of the electronic device and includes a pinion gear automatically operating the second housing to be slidable by a designated reciprocating distance relative to the first housing held by a user, and a rack gear that is disposed in the other housing (e.g., the second housing or the first housing) and is gear-engaged with the pinion gear. For example, when the driving motor including the pinion gear is disposed in the first housing or the second housing, the rack gear having a length along a sliding direction and gear-engaged with the pinion gear may be disposed in the other housing.

The rollable electronic device may include a linear motion (LM) guide that guides sliding of the first housing and the second housing, and a first rail structure that moves relative to the LM guide. The LM guide and the first rail structure may be disposed on opposite objects. For example, when the LM guide is disposed in the first housing or the second housing, the first rail structure may be disposed in the other housing. The reverse structure may also be possible. The LM guide and the first rail structure may be disposed on both side surfaces of the electronic device to guide sliding of the two housings.

Meanwhile, in the case of the rollable electronic device, in addition to power required to drive electronic components, power for the driving motor that drives the sliding motion of the electronic device may be needed. Thus, the battery power consumption rate of the rollable electronic device may be higher than that of other electronic devices (e.g., bar-type electronic devices). As described above, the rack gear, the driving motor, the LM guide, and the first rail structure may be disposed inside the rollable electronic device for the sliding motion. Therefore, a space for disposing the battery is not sufficiently secured, so there is a limit to expanding the size of the battery.

The problems to be solved in the disclosure are not limited to the above-mentioned problems and may be variously expanded without departing from the idea and scope of the disclosure.

### [Solution to Problem]

An electronic device according to various embodiments disclosed in this document may include a flexible display. The electronic device may include a first housing. The electronic device may include a second housing comprising a support plate, a first side, and a second side extending from both sides of the support plate. The electronic device may include a first rail structure disposed on the first side of the second housing. The electronic device may include a sliding structure fixed to the first housing, coupled with the first rail structure, and configured to move, at least in part, relative to the first rail structure in response to movement of the first housing with respect to the second housing. The electronic device may include a second rail structure disposed on the periphery of the second side of the support plate of the second housing, and extending in the same direction as the movement direction of the first housing with respect to the second housing. The electronic device may include a driving unit comprising a driving motor and a first gear connected to the driving motor and rotated by the driving force of the driving motor. The electronic device may include a recess configured to accommodate the second rail structure, and a second gear directly engaged with the first gear to receive the driving force through the first gear and move linearly along the second rail structure, thereby enabling the first housing to move with respect to the second housing. The electronic device may include a bearing member disposed, at least in part, between the second rail structure and the recess of the second gear.

An electronic device according to an embodiment of the disclosure may include a flexible display. The electronic device may include a first housing. The electronic device may include a second housing comprising a support plate, a first side, and a second side extending from both sides of the support plate. The electronic device may include a first rail structure disposed on the first side of the second housing. The electronic device may include a sliding structure fixed to the first housing, coupled with the first rail structure, and configured to move, at least in part, relative to the first rail structure in response to movement of the first housing with respect to the second housing. The electronic device may include a second rail structure disposed on the periphery of the second side of the support plate of the second housing, and extending in the same direction as the movement direction of the first housing with respect to the second housing. The electronic device may include a driving unit comprising a driving motor and a pinion gear connected to the driving motor and rotated by the driving force of the driving motor. The electronic device may include a recess in which the second rail structure is accommodated, and a rack gear fixed at one end to the first housing and engaged with the pinion gear to be driven. The electronic device may include a bearing member disposed, at least in part, in the recess between the second rail structure and the rack gear.

An electronic device according to an embodiment of the disclosure may include a flexible display. The electronic device may include a first housing. The electronic device may include a second housing comprising a support plate, a first side, and a second side extending from both sides of the support plate. The electronic device may include a first rail structure disposed on the first side of the second housing. The electronic device may include a sliding structure fixed to the first housing, coupled with the first rail structure, and configured to move, at least in part, relative to the first rail structure in response to movement of the first housing with respect to the second housing. The electronic device may include a second rail structure disposed on the periphery of the second side of the support plate of the second housing, and extending in the same direction as the movement direction of the first housing with respect to the second housing. The electronic device may include a driving unit comprising a driving motor and a screw member connected to the driving motor and rotated by the driving force of the driving motor. The electronic device may include a recess configured to accommodate the second rail structure, a fastening portion screw-coupled with the screw member, and a fastening structure configured to move along the second rail structure based on rotation of the screw member. The electronic device may include a bearing member disposed, at least in part, in the recess between the second rail structure and the fastening structure.

### [Advantageous Effects of Invention]

According to various embodiments of the disclosure, one of the first rail structure disposed on both sides of the electronic device may be omitted. For example, among the first rail structure, the first rail structure disposed adjacent to the rack gear may be omitted. Instead of the omitted first rail structure, the second rail structure may be disposed in one of the first housing and the second housing. The rack gear may have the recess that accommodates the second rail structure. The rack gear may be engaged with the pinion gear of the driving motor and guided to move through the second rail structure during driving. Compared to the case where the first rail structure adjacent to the rack gear is disposed on the side of the electronic device, in the embodiment where the first rail structure disposed adjacent to the rack gear is omitted, an additional space may be secured on the left and right sides of the rack gear. Thus, the size of the battery may be expanded by the amount of space created by the omission of the first rail structure adjacent to the rack gear. Accordingly, the size of the battery may be increased, thereby increasing the capacity of the battery.

The effects obtainable from the disclosure are not limited to the above-mentioned effects, and other effects not mentioned will be clearly understood from the following description by a person having ordinary skill in the art to which the disclosure belongs.

### [Brief Description of Drawings]

In connection with the description of drawings, identical or similar reference numerals may be used for identical or similar components.
FIG. 1 is a block diagram of an electronic device in a network environment according to various embodiments of the disclosure.
FIG. 2A and FIG. 2B are diagrams illustrating the front and rear surfaces of an electronic device in a slide-in state according to various embodiments of the disclosure.
FIG. 3A and FIG. 3B are diagrams illustrating the front and rear surfaces of an electronic device in a slide-out state according to various embodiments of the disclosure.
FIG. 4A is an exploded perspective view of an electronic device according to various embodiments of the disclosure.
FIG. 4B is a perspective view of a support bracket with a battery placed according to various embodiments of the disclosure.
FIG. 5A is a cross-sectional view of an electronic device taken along line 5a-5a of FIG. 2A according to various embodiments of the disclosure.
FIG. 5B is a cross-sectional view of an electronic device taken along line 5b-5b of FIG. 3A according to various embodiments of the disclosure.
FIG. 6A is a diagram illustrating the rear surface of an electronic device in a slide-in state of the electronic device according to various embodiments of the disclosure.
FIG. 6B is a diagram illustrating the rear surface of an electronic device in a slide-out state of the electronic device according to various embodiments of the disclosure.
FIG. 7A is a diagram illustrating a bearing fixing member disposed on a second rail structure formed in a second housing according to various embodiments of the disclosure.
FIG. 7B is a cross-sectional view taken along line 7b-7b of FIG. 7A.
FIGS. 8A and 8B are diagrams illustrating the assembly relationship of a driving motor, a pinion gear, a rack gear, a bearing fixing member, and a first rail structure according to various embodiments of the disclosure.
FIG. 8C is a cross-sectional view taken along line 8c-8c of FIG. 8B.
FIG. 9 is a diagram illustrating the arrangement relationship of a pinion gear, a rack gear, a bearing fixing member, and a second rail structure according to various embodiments of the disclosure.
FIG. 10A is a diagram illustrating the rear surface of an electronic device in a slide-in state of the electronic device according to various embodiments of the disclosure.
FIG. 10B is a diagram illustrating the rear surface of an electronic device in a slide-out state of the electronic device according to various embodiments of the disclosure.
FIGS. 11A, 11B, and 11C are diagrams illustrating the arrangement relationship of a driving motor, a screw member, and a fastening structure according to various embodiments of the disclosure.
FIG. 12 is a diagram illustrating the arrangement relationship of a screw member, a fastening structure, a bearing member, and a first rail structure according to various embodiments of the disclosure.
FIG. 13 is a diagram illustrating the rear surface of an electronic device in a slide-out state of the electronic device according to various embodiments of the disclosure.
FIG. 14 is a diagram illustrating the coupling relationship of a chain member fastened to a pinion gear of a driving motor, a chain guide member guiding the chain member, and a sliding structure movably coupled with the chain guide member according to various embodiments of the disclosure.
FIG. 15 is a cross-sectional view taken along line 15-15 of FIG. 13.

### [Mode for the Invention]

Hereinafter, embodiments of the disclosure will be described in detail with reference to the drawings so that those skilled in the art can easily implement the disclosure. The disclosure may be, however, implemented in various different forms and is not limited to the embodiments described herein. In connection with the description of the drawings, the same or similar reference numerals may be used for the same or similar components. Additionally, in the drawings and related descriptions, descriptions of well-known functions and components may be omitted for clarity and conciseness.

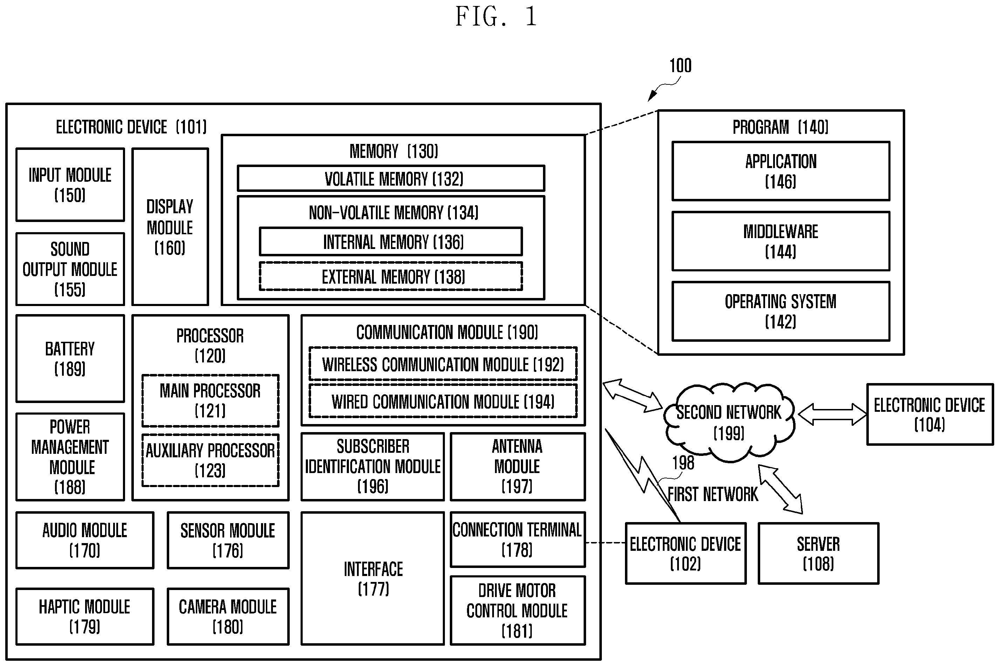

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

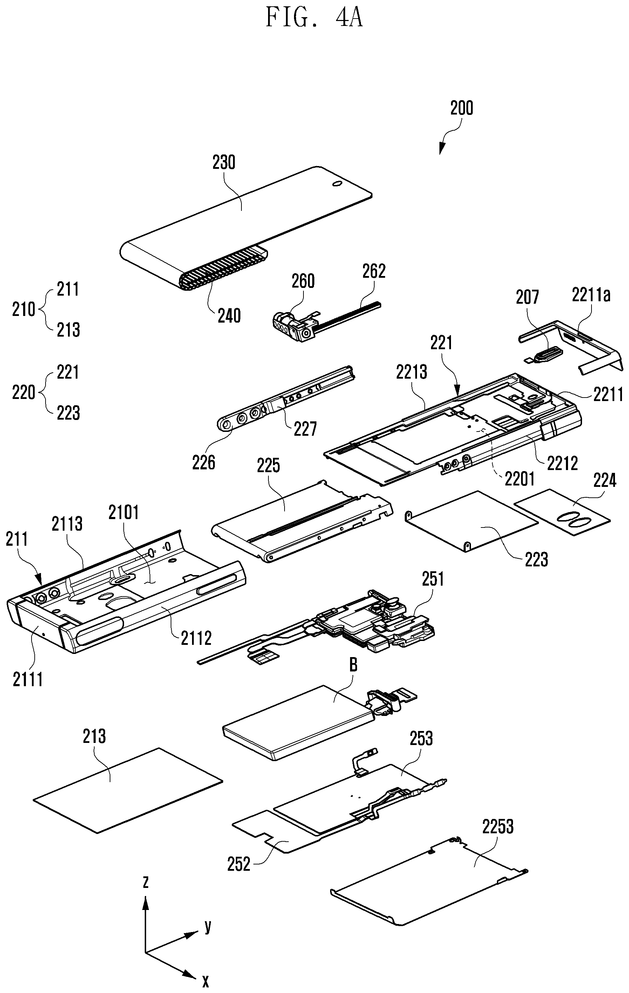

According to various embodiments, the sensor module 176 may include a movement distance detection sensor for detecting a movement distance of a second housing (e.g., the second housing 220 in FIG. 4A) from a first housing (e.g., the first housing 210 in FIG. 4A) of an electronic device (e.g., the electronic device 200 in FIG. 4A). In an embodiment, the sensor module 176 may detect a first state which is a slide-in state where the second housing 220 is completely slid in into the first housing 210, a second state which is a slide-out state where the second housing 220 is completely slid out from the first housing 210, or an intermediate state between the slide-in state and the slide-out state. In some embodiment, the processor 120 may detect, through the sensor module 176, the movement distance in real time while the second housing 220 is moved from the first housing 210, and may control, through a flexible display (e.g., the flexible display 230 in FIG. 4A), the display module 160 to display an object corresponding to a varying display area. In an embodiment, the electronic device 101 may include a driving motor control module 181 for controlling the operation of a driving motor (e.g., a DC motor or a stepping motor) (e.g., the driving motor 260 in FIG. 4A) disposed inside the electronic device. In some embodiment, the driving motor control module 181 may be replaced with the processor 120.

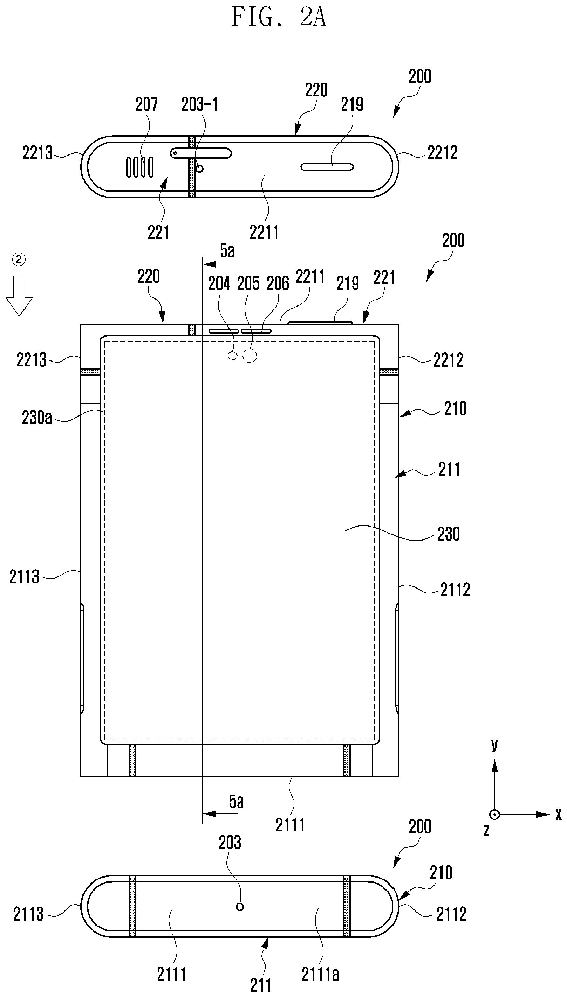

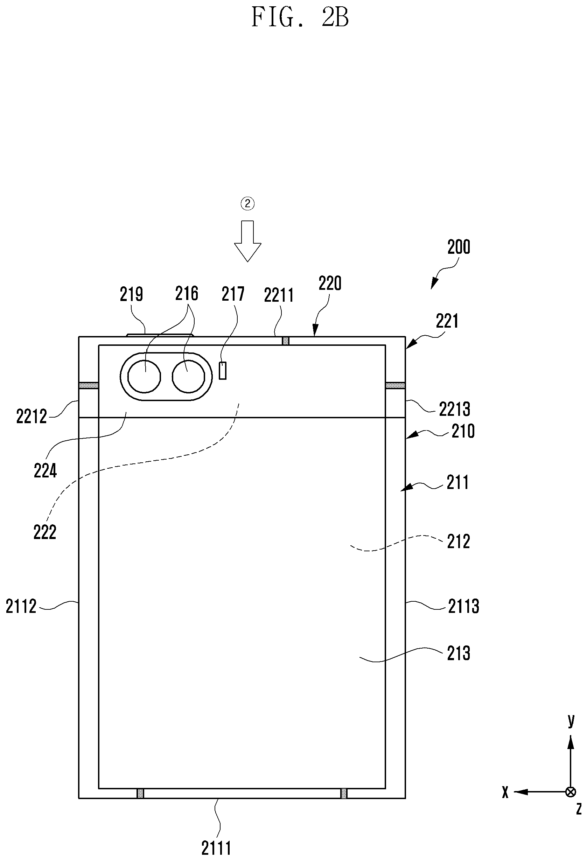

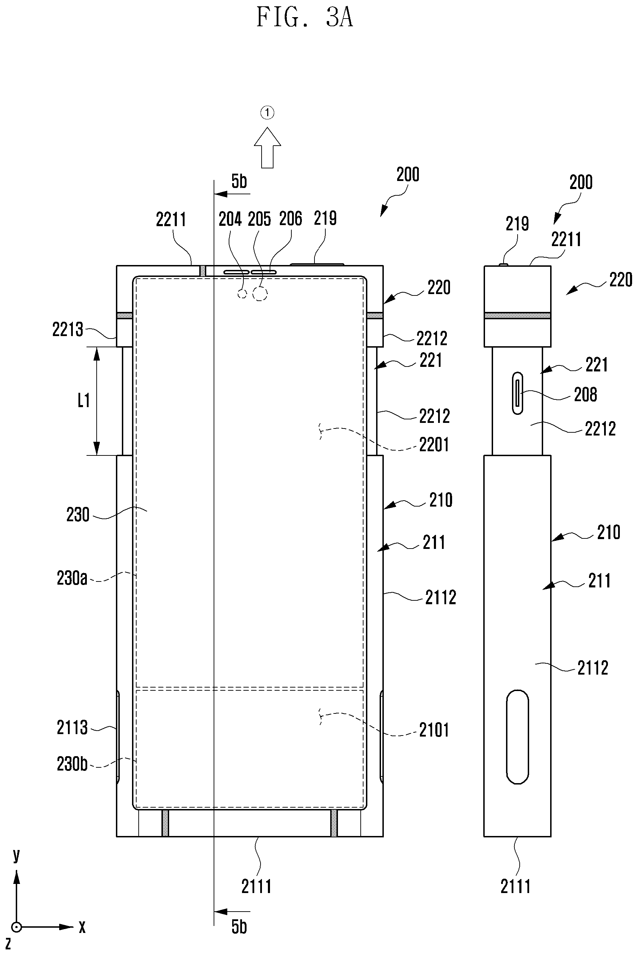

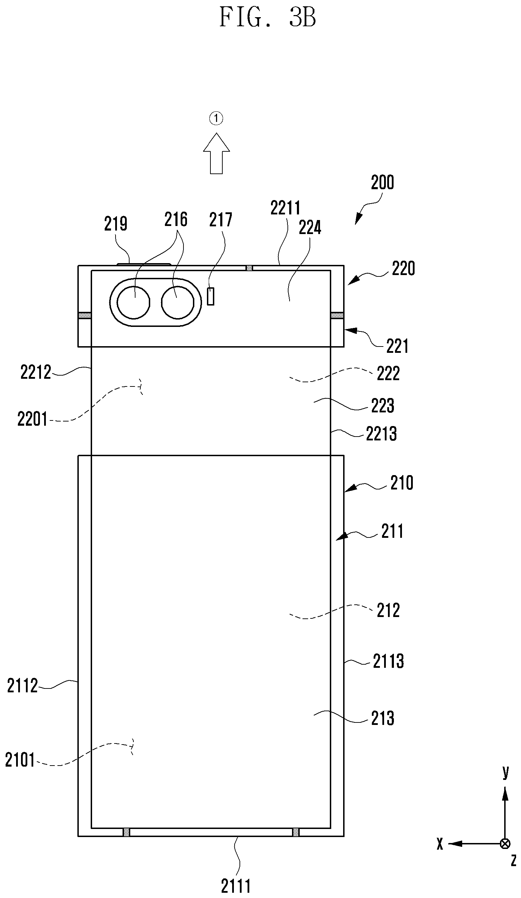

FIG. 2A and FIG. 2B are diagrams illustrating the front and rear surfaces of an electronic device in a slide-in state according to various embodiments of the disclosure. FIG. 3A and FIG. 3B are diagrams illustrating the front and rear surfaces of an electronic device in a slide-out state according to various embodiments of the disclosure.

The electronic device 200 in FIGS. 2A to 3B may be at least partially similar to the electronic device 101 in FIG. 1, or may further include other embodiments of the electronic device.

With reference to FIGS. 2A to 3B, the electronic device 200 may include a first housing 210 (e.g., a book cover or a first housing structure), a second housing 220 (e.g., a front cover or a second housing structure) slidably coupled with the first housing 210 in a designated direction (e.g., direction ① or direction ②) (e.g., ±y-axis direction), and a flexible display 230 (e.g., a rollable display, an expandable display, or a stretchable display) disposed to be supported by at least a part of the first and second housings 210 and 220. In an embodiment, the second housing 220 may be slidably coupled with the first housing 210 so as to be slid out along a first direction (direction ①) or slid in along a second direction (direction ②) opposite to the first direction (direction ①) with respect to the first housing 210. In an embodiment, the electronic device 200 may be changed to a slide-in state as a first state while at least a part of the second housing 220 is accommodated in at least a part of a first space 2101 formed by the first housing 210. In an embodiment, the electronic device 200 may be changed to a slide-out state as a second state while at least a part of the second housing 220 is moved outwardly (e.g., in direction ①) from the first space 2101. In an embodiment, the electronic device 200 may include a support member (e.g., the support member 240 in FIG. 4A) (e.g., a bendable member, a multi-joint hinge module, a multi-bar assembly, a support bar assembly, or a multi-bar) that forms at least partially the same plane as at least a part of the second housing 220 in the slide-out state, and is accommodated at least partially into the first space 2101 of the first housing 210 by bending in the slide-in state. In an embodiment, at least a part of the flexible display 230 may be disposed to be supported by at least a part of the second housing 220. In an embodiment, at least a part of the remaining part of the flexible display 230 may be disposed to be supported by the support member 240 (e.g., the support member 240 in FIG. 4A). In an embodiment, the support member (e.g., the support member 240 in FIG. 4A) may be disposed in a manner of being attached to the rear surface of the flexible display 230. In an embodiment, in the slide-in state, at least a part of the flexible display 230 may be accommodated into the first space 2101 of the first housing 210 in a manner of bending while being supported by the support member (e.g., the support member 240 in FIG. 4A), thereby being disposed to be invisible from the outside. In an embodiment, in the slide-out state, at least a part of the flexible display 230 may be moved to be visible from the outside while being supported by the support member (e.g., the support member 240 in FIG. 4A) that forms at least partially the same plane as the second housing 220.

According to various embodiments, the first housing 210 may include a first lateral member 211, and the second housing 220 may include a second lateral member 221. In an embodiment, the first lateral member 211 may include a first side surface 2111 disposed at a lower side of the electronic device 200 and having a first length, a second side surface 2112 extending from one end of the first side surface 2111 in a perpendicular direction (e.g., in the y-axis direction) and having a second length, and a third side surface 2113 extending from the other end of the first side surface 2111 in parallel with the second side surface 2112 and having the second length. In an embodiment, the first lateral member 211 may be formed at least partially of a conductive member (e.g., metal). In some embodiment, the first lateral member 211 may be formed by a combination of a conductive member and a non-conductive member (e.g., polymer). In an embodiment, the first housing 210 may include a first extension member 212 that extends from at least a part of the first lateral member 211 to at least a part of the first space 2101. In an embodiment, the first extension member 212 may be formed integrally with the first lateral member 211. In some embodiment, the first extension member 212 may be formed separately from the first lateral member 211 and structurally coupled with the first lateral member 211.

According to various embodiments, the second lateral member 221 may include a fourth side surface 2211 disposed on an upper side of the electronic device 200 and having a third length, a fifth side surface 2212 extending from one end of the fourth side surface 2211 in a perpendicular direction (e.g., in the -y-axis direction) to correspond to the second side surface 2112 and having a fourth length, and a sixth side surface 2213 extending from the other end of the fourth side surface 2211 in a direction parallel to the fifth side surface 2212 to correspond to the third side surface 2113 and having the fourth length. In an embodiment, the second lateral member 221 may be formed at least partially of a conductive member (e.g., metal). In some embodiment, the second lateral member 221 may be formed by a combination of a conductive member and a non-conductive member (e.g., polymer). In an embodiment, at least a part of the second lateral member 221 may include a support plate 222 that extends to at least a part of a second space 2201 of the second housing 220. In an embodiment, the support plate 222 may be formed integrally with the second lateral member 221. In some embodiment, the support plate 222 may be formed separately from the second lateral member 221 and structurally coupled with the second lateral member 221.

According to various embodiments, the second side surface 2112 and the fifth side surface 2212 may be slidably coupled with respect to each other. In an embodiment, the third side surface 2113 and the sixth side surface 2213 may be slidably coupled with respect to each other. In an embodiment, in the slide-in state, a part of the fifth side surface 2212 may be disposed to overlap with the second side surface 2112 so as to be substantially invisible from the outside. In an embodiment, in the slide-in state, the remaining part of the fifth side surface 2212 may be disposed to be visible from the outside. In some embodiment, in the slide-in state, the fifth side surface 2212 may be disposed to overlap with the second side surface 2112 so as to be substantially invisible from the outside. In an embodiment, in the slide-in state, a part of the sixth side surface 2213 may be disposed to overlap with the third side surface 2113 so as to be substantially invisible from the outside. In an embodiment, in the slide-in state, the remaining part of the sixth side surface 2213 may be disposed to be visible from the outside. In some embodiment, in the slide-in state, the sixth side surface 2213 may be disposed to overlap with the third side surface 2113 so as to be substantially invisible from the outside. In an embodiment, in the slide-in state, a part of the support plate 222 may be disposed to be visible from the outside. In some embodiment, in the slide-in state, the support plate 222 may be disposed to overlap with the first extension member 212 so as to be substantially invisible from the outside.

According to various embodiments, the first housing 210 may include a first rear cover 213 coupled with at least a part of the first lateral member 211. In an embodiment, the first rear cover 213 may be disposed in a manner of being coupled with at least a part of the first extension member 212. In some embodiment, the first rear cover 213 may be formed integrally with the first lateral member 211. In an embodiment, the first rear cover 213 may be formed of a polymer, a coated or colored glass, a ceramic, a metal (e.g., aluminum, stainless steel (STS), or magnesium), or a combination of at least two of these materials. In some embodiment, the first rear cover 213 may extend to at least a part of the first lateral member 211. In some embodiment, the first rear cover 213 may be omitted, and at least a part of the first extension member 212 may replace the first rear cover 213.

According to various embodiments, the second housing 220 may include a second rear cover 223 coupled with at least a part of the second lateral member 221. In an embodiment, the second rear cover 223 may be disposed in a manner of being coupled with at least a part of the support plate 222. In an embodiment, the second rear cover 223 may be formed integrally with the second lateral member 221. In an embodiment, the second rear cover 223 may be formed of a polymer, a coated or colored glass, a ceramic, a metal (e.g., aluminum, stainless steel (STS), or magnesium), or a combination of at least two of these materials. In some embodiment, the second rear cover 223 may extend to at least a part of the second lateral member 221. In some embodiment, the second rear cover 223 may be omitted, and at least a part of the support plate 222 may replace the second rear cover 223. In some embodiment, the support plate 222 may be omitted, and the second rear cover 223 may replace the support plate 222. In an embodiment, the second housing 220 may include a window cover 224 disposed on at least a part of the second rear cover. In an embodiment, the window cover 224 may be disposed in a region exposed to the outside of the second housing 220 in the slide-in state, and may be formed of a material that facilitates detection of an external environment through at least one camera module 216 and/or sensor module 217 disposed in the internal space 2201 of the second housing 220. For example, the window cover 224 may be formed of a glass and/or polymer material in which at least a region corresponding to the camera module 216 and/or sensor module 217 is formed transparently. In some embodiment, the electronic device 200 may further include a cover member 2111a disposed to cover at least a part of the first side surface 2111 of the first housing 210.

According to various embodiments, the flexible display 230 may include a first portion 230a (e.g., a flat portion) that is always visible from the outside, and a second portion 230b (e.g., a bendable portion) that extends from the first portion 230a and is accommodated into the first space 2101 of the first housing 210 in a manner of at least partially bending so as to be invisible from the outside in the slide-in state. In an embodiment, at least a part of the first portion 230a may be disposed to be supported by the second housing 220, and the remaining part of the first portion 230a and the second portion 230b may be disposed to be at least partially supported by a support member (e.g., the support member 240 in FIG. 4A). In an embodiment, the second portion 230b of the flexible display 230 may be disposed to form substantially the same plane as the first portion 230a and to be visible from the outside while being supported by the support member (e.g., the support member 240 in FIG. 4A) in a state where the second housing 220 is slid out along the first direction (direction ①). In an embodiment, the second portion 230b of the flexible display 230 may be disposed to be accommodated into the first space 2101 of the first housing 210 in a manner of bending and to be invisible from the outside in a state where the second housing 220 is slid in along the second direction (direction ②). Accordingly, the display area of the flexible display 230 may be varied as the second housing 220 is moved in a sliding manner along a designated direction (e.g., ±y-axis direction) from the first housing 210.

According to various embodiments, the flexible display 230 may have a first display area (e.g., a region corresponding to the first portion 230a) in the slide-in state (e.g., the first state). In an embodiment, when transitioning to the slide-out state (e.g., the second state) in which the second housing 220 is moved by a first length L1 (e.g., a sliding stroke) with respect to the first housing 210, the flexible display 230 may further secure a second display area (e.g., a region corresponding to the second portion 230b) corresponding to the first length L1 in addition to the first display area. For example, when the flexible display 230 transitions from the slide-in state to the slide-out state, the display area may be expanded.

According to various embodiments, the electronic device 200 may include at least one of an input device (e.g., a microphone 203-1), an audio output device (e.g., a call receiver 206 and/or a speaker 207), sensor modules 204 and 217, a camera module (e.g., a first camera module 205 or a second camera module 216), a connector port 208, a key input device 219, or an indicator (not shown), disposed in the second space 2201 of the second housing 220. In an embodiment, the electronic device 200 may include another input device (e.g., a microphone 203) disposed in the first housing 210. In some embodiment, the electronic device 200 may be configured such that at least one of the above-mentioned components is omitted or other components are further included. In some embodiment, at least one of the above-mentioned components may be disposed in the first space 2101 of the first housing 210.

According to various embodiments, the input device may include the microphone 203-1. In some embodiment, the input device (e.g., the microphone 203-1) may include a plurality of microphones arranged to detect the direction of sound. The audio output device may include, for example, the call receiver 206 and the speaker 207. In an embodiment, regardless of the slide-in/slide-out states, the speaker 207 may be in contact with the outside through at least one speaker hole formed in the second housing 220 at a location (e.g., the fourth side surface 2211) that is always exposed to the outside. In an embodiment, in the slide-out state, the connector port 208 may be in contact with the outside through a connector port hole formed in the second housing 220. In an embodiment, in the slide-in state, the connector port 208 may be covered so as to be invisible from the outside. In some embodiment, in the slide-in state, the connector port 208 may be in contact with the outside through an opening formed in the first housing 210 to correspond to the connector port hole. In some embodiment, the call receiver 206 may include a speaker (e.g., a piezo speaker) that operates without a separate speaker hole.

According to various embodiments, the sensor modules 204 and 217 may generate electrical signals or data values corresponding to an internal operating state of the electronic device 200 or an external environmental state. In an embodiment, the sensor modules 204 and 217 may include, for example, a first sensor module 204 (e.g., a proximity sensor or an illuminance sensor) disposed on the front of the electronic device 200 and/or a second sensor module 217 (e.g., a heart rate monitoring (HRM) sensor) disposed on the rear of the electronic device 200. In an embodiment, the first sensor module 204 may be disposed under the flexible display 230 on the front of the electronic device 200. In an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front of the electronic device 200 and a second camera module 216 disposed on the rear of the electronic device 200. In an embodiment, the electronic device 200 may also include a flash (not shown) positioned near the second camera module 216. In an embodiment, the camera modules 205 and 216 may include one or more lenses, an image sensor, and/or an image signal processor. In an embodiment, the first camera module 205 may be disposed under the flexible display 230 and configured to capture a subject through a part of an active area (e.g., a display area) of the flexible display 230.

According to various embodiments, the first camera module 205 among the camera modules and the first sensor module 204 among the sensor modules 204 and 217 may be disposed to detect an external environment through the flexible display 230. For example, the first camera module 205 or the first sensor module 204 may be disposed in the second space 2201 of the second housing 220 so as to be in contact with the external environment through a transmissive region or a perforated opening formed in the flexible display 230. In an embodiment, a region of the flexible display 230 facing the first camera module 205 may be formed as a transmissive region having a designated transmittance as a part of an active area that displays content. In an embodiment, the transmissive region may be formed to have a transmittance in a range of about 5% to about 20%. This transmissive region may include a region overlapping with an effective area (e.g., a field of view area) of the first camera module 205 through which light passes to be imaged by the image sensor to generate an image. For example, the transmissive region of the flexible display 230 may include a region having a lower pixel arrangement density and/or lower wiring density than the surrounding region. For example, the transmissive region may be replaced with the above-mentioned opening. For example, some camera module 205 may include an under display camera (UDC). In some embodiment, some sensor module 204 may be disposed to perform its function without being visually exposed through the flexible display 230 in the second space 2201 of the second housing 220.

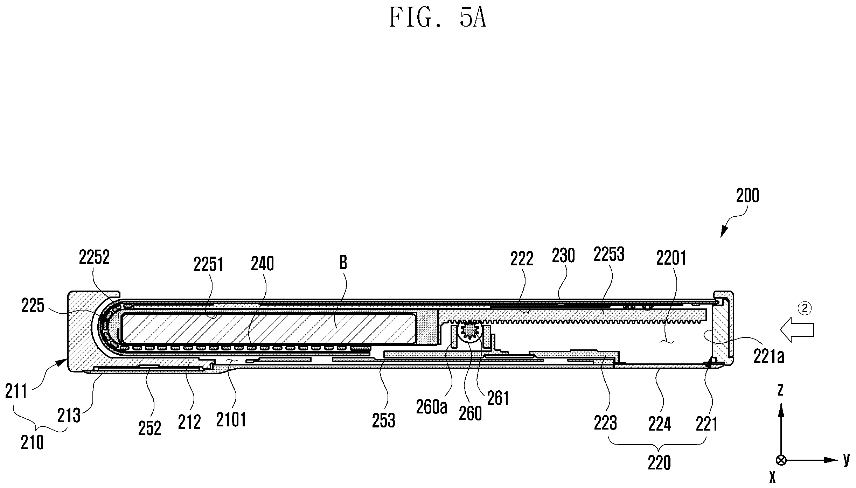

According to various embodiments, the slide-in and/or slide-out operation of the electronic device 200 may be performed automatically. For example, the slide-in and/or slide-out operation of the electronic device 200 may be performed through gear engagement between a driving motor (e.g., the driving motor 260 in FIG. 4A), including a pinion gear (e.g., the pinion gear 261 in FIG. 5A) disposed in the second space 2201 of the second housing 220, and a rack gear (e.g., the rack gear 262 in FIG. 5A), disposed in the first space 2101 of the first housing 210, extending to at least a part of the second space 2201, and coupled with the pinion gear (e.g., the pinion gear 261 in FIG. 5A). For example, when a processor (e.g., the processor 120 in FIG. 1) of the electronic device 200 detects a triggering signal for transitioning from the slide-in state to the slide-out state or from the slide-out state to the slide-in state, the processor may drive the driving motor (e.g., the driving motor 260 in FIG. 4A) disposed inside the electronic device 200. In an embodiment, the triggering signal may include a signal based on selection (e.g., touch) of an object displayed on the flexible display 230 or a signal based on manipulation (e.g., press) of a physical button (e.g., a key button) included in the electronic device 200.

According to various embodiments, the electronic device 200 has a structure in which the second housing 220 is slid in and/or slid out relative to the first housing 210 along the longitudinal direction (e.g., perpendicular direction) (e.g., ±y-axis direction) of the electronic device 200, but is not limited thereto. For example, the electronic device 200 may also have a structure in which the second housing 220 is slid in and/or slid out relative to the first housing 210 along the width direction (e.g., horizontal direction) (e.g., ±x-axis direction) perpendicular to the longitudinal direction of the electronic device 200. In some embodiment, the electronic device 200 may be formed such that the length of the first side surface 2111 of the first housing 210 is greater than the length of the second side surface 2112. In this case, the length of the fourth side surface 2211 of the second housing 220 may also be greater than the length of the fifth side surface 2212.

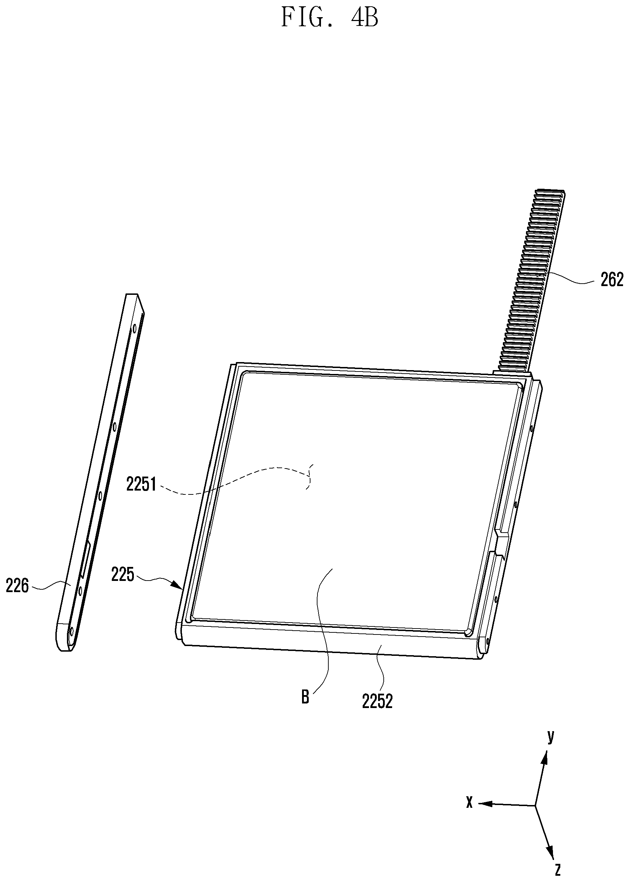

FIG. 4A is an exploded perspective view of an electronic device according to various embodiments of the disclosure. FIG. 4B is a perspective view of a support bracket with a battery placed according to various embodiments of the disclosure.

In describing the electronic device 200 in FIG. 4A, the same reference numerals are given to components that are substantially the same as those of the electronic device 200 in FIGS. 2A to 3B, and a detailed description thereof may be omitted.

With reference to FIG. 4A, the electronic device 200 may include a first housing 210 including a first space 2101, a second housing 220 that is slidably coupled with the first housing 210 and has a second space 2201, a support member 240 (e.g., a bendable member, a support bar assembly, or a multi-bar assembly) that is fixed to at least a part of the second housing 220 and is at least partially bendably accommodated into the first space 2101 according to a slide-in operation, a flexible display 230 that is disposed to be supported by at least a part of the support member 240 and the second housing 220, and a driving unit (e.g., a driving module or a driving mechanism) that drives the second housing 220 relative to the first housing 210 in a slide-in direction (e.g., in the -y-axis direction) and/or a slide-out direction (e.g., in the y-axis direction). In some embodiment, depending on the arrangement position of the driving unit (e.g., a driving motor 260, a rack gear 262, a screw member 411, and a pinion gear 261) in the electronic device 200, the first housing 210 may be slidably coupled with the second housing 220. In an embodiment, the first housing 210 may include a first lateral member 211 and a first rear cover 213 (e.g., a first rear bracket) coupled with at least a part of the first lateral member 211. In an embodiment, the first space 2101 may be formed through the coupling of the first lateral member 211 and the first rear cover 213. In an embodiment, the electronic device 200 may include a lateral cover 2211a (e.g., a dielectric cover) disposed on a fourth side surface 2211 of the second lateral member 221.

According to various embodiments, the second housing 220 may include a second lateral member 221 and a second rear cover 223 (e.g., a second rear bracket or a window cover) coupled with at least a part of the second lateral member 221. In an embodiment, the second space 2201 may be formed through the coupling of the second lateral member 221 and the second rear cover 223. In an embodiment, the second housing 220 may include a window cover 224 coupled with the second lateral member 221 and forming at least a part of the rear surface of the second housing 220.

According to various embodiments, as illustrated in FIGS. 4A and 4B, the driving unit (e.g., the driving module) may include a driving motor 260 disposed in the second space 2201 and including a pinion gear (e.g., the pinion gear 261 in FIG. 5A), and a rack gear 262 fixed to a support bracket 225 disposed in the first space 2101, extending from the first space 2101 to the second space 2201, and disposed to be gear-engaged with the pinion gear 261. In an embodiment, the rack gear 262 may be coupled with and fixed to the support bracket 225 at one end thereof. In an embodiment, the electronic device 200 may further include a speed reduction module (e.g., a reduction gear assembly) structurally coupled with the driving motor 260 to reduce a rotational speed and increase a driving force. In an embodiment, the driving motor 260 may be disposed in the second space 2201 of the second housing 220 to be supported by at least a part (e.g., the support plate 222 in FIG. 5A) of the second lateral member 221. In an embodiment, the driving motor 260 may be disposed to be supported by a motor bracket (e.g., the motor bracket 260a in FIG. 5A) fixed to the support plate 222. In some embodiment, the rack gear 262 may be guided in a sliding direction (e.g., in the ±y-axis direction, the moving direction) by the motor bracket 260a. Accordingly, when the electronic device 200 is assembled, the pinion gear (e.g., the pinion gear 261 in FIG. 5A) can maintain a state of gear engagement with the rack gear 262, and the pinion gear 261 provided with the driving force of the driving motor 260 can move along the rack gear 262, so that the second housing 220 can move in the slide-in direction (e.g., in the -y-axis direction) or the slide-out direction (e.g., in the y-axis direction) with respect to the first housing 210.

According to various embodiments, the electronic device 200 may include the support bracket 225 fixed to the first space 2101 of the first housing 210. In an embodiment, the electronic device 200 may include at leat one of sliding structure 226 (e.g., linear motion (LM) guides) fixed to both sides of the support bracket 225 to guide both ends of the support member 240 in the sliding direction and simultaneously guide the second housing 220 in the sliding direction. In an embodiment, the support bracket 225 and the at least one of sliding structure 226 may be fixed to the first housing 210 through a fastening member such as a screw. As described below, a sliding structure 226 may be coupled to a support bracket 225 so as to be adjacent to a second side 2112 of the first housing 210. In some embodiments, the sliding structure 226 may be provided in plurality, and may include a sliding structure 226 coupled to the support bracket 225 so as to be adjacent to the second side 2112 of the first housing 210, and a sliding structure 226 coupled to the support bracket 225 so as to be adjacent to a third side 2113 of the first housing 210.

In an embodiment, the support bracket 225 may include a battery mounting portion (e.g., the battery mounting portion 2251 in FIG. 5A) for accommodating a battery B, and a support portion (e.g., the support portion 2252 in FIG. 5A) formed at one end of the battery mounting portion 2251 and supporting the rear surface of the support member 240 that bends during the sliding operation of the second housing 220. In an embodiment, the support portion 2252 may have a curved outer surface formed to smoothly guide the support member 240. In an embodiment, the support bracket 225 and the sliding structure 226 may be fixed in the first space 2101 of the first housing 210 through a fastening member such as a screw. In an embodiment, the electronic device 200 may further include a battery cover 2253 coupled with the support bracket 225 to cover the mounted battery B. In some embodiment, the battery cover 2253 may be omitted. In an embodiment, the rack gear 262 may be fixed via a fastening member, such as a screw, on the outer surface of the support bracket 225 so as to extend toward the second space 2201. In an embodiment, the rack gear 262 may be disposed at the center (e.g., the center of left-right symmetry) of the support bracket 225 so as to cross the center of the electronic device 200 along the sliding direction (e.g., the ±y-axis direction) of the second housing 220. This central arrangement may reduce the increase in driving resistance due to eccentricity during the sliding operation, thereby reducing current consumption.

According to various embodiments, the electronic device 200 may include at least one electrical component (or electronic component) disposed in the second space 2201. In an embodiment, the at least one electrical component may include a first substrate 251 (e.g., a substrate assembly or a main substrate) (e.g., laminated type substrates). In some embodiment, the at least one electrical component may be disposed in the first space 2101 of the first housing 210.

According to various embodiments, the electronic device 200 may include a second substrate 252 (e.g., a sub-substrate) and an antenna member 253 disposed between the first extension member (e.g., the first extension member 212 in FIG. 5A) and the first rear cover 213 in the first housing 210. In an embodiment, the second substrate 252 and the antenna member 253 may be disposed on at least a part of the first extension member 212. In an embodiment, the second substrate 252 and the antenna member 253 may be electrically connected to the first substrate 251 via at least one electrical connection member (e.g., a flexible printed circuit board (FPCB) or a flexible RF cable (FRC)). In an embodiment, the antenna member 253 may include a multi-function coil or multi-function core (MFC) antenna for performing a wireless charging function, a neat field communication (NFC) function, and/or an electronic payment function. In some embodiment, the second substrate 252 and/or the antenna member 253 may extend from the first space 2101 to the second space 2201 and be electrically connected to the first substrate 251 via an elastically deformable flexible substrate (flexible printed circuit board (FPCB).

According to various embodiments, as illustrated in FIGS. 4B, the electronic device 200 may include a first rail structure 227 (e.g., guide block) fixed to the second housing 220 and slidably coupled with the sliding structure 226. In an embodiment, through the slidable coupling of the sliding structure 226 and the first rail structure 227, the second housing 220 may be slid out from the first housing 210 by a specific distance (e.g., the first distance L1 in FIG. 3A). In an embodiment, the first rail structure 227 may be disposed on the fifth side surface 2212 and the sixth side surface 2213 of the second lateral member 221 of the second housing 220, respectively.

In one embodiment, as illustrated in FIG. 4B, a sliding structure 226 may be coupled to a support bracket 225 so as to be adjacent to a second side 2112 of the first housing 210. However, the present disclosure is not limited thereto. The sliding structure 226 may be provided in plurality, and may include a sliding structure 226 coupled to the support bracket 225 so as to be adjacent to the second side 2112 of the first housing 210, and another sliding structure 226 coupled to the support bracket 225 so as to be adjacent to a third side 2113 of the first housing 210. In one embodiment, a support member 240 supporting the flexible display 230 may be inserted at one end into the sliding structure 226 fixed to one end of the support bracket 225, and at the other end into the sliding structure 226 fixed to the other end of the support bracket 225, so as to be movable within the sliding structure 226 in response to sliding of the second housing 220 with respect to the first housing 210.

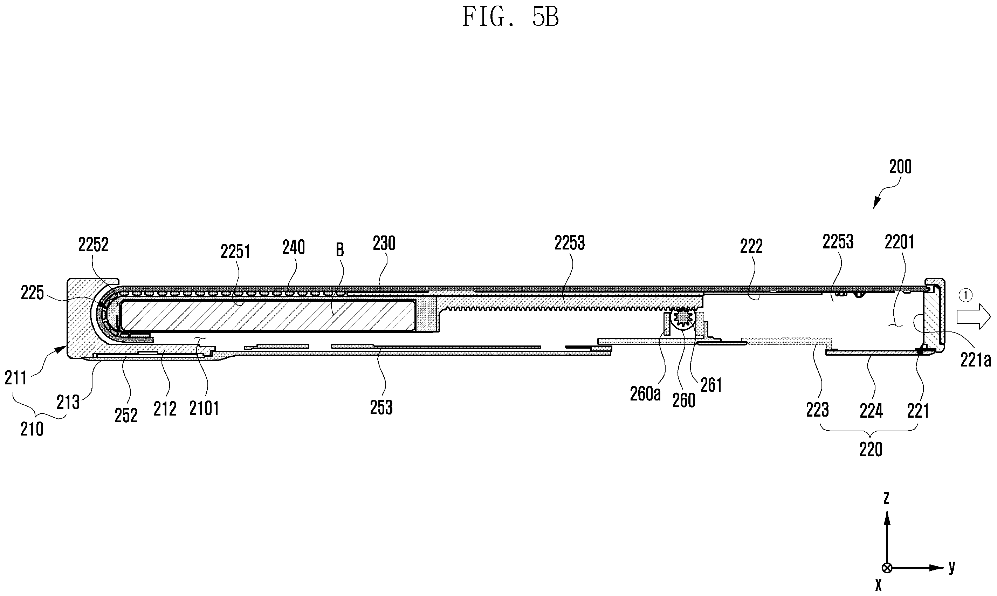

FIG. 5A is a cross-sectional view of an electronic device taken along line 5a-5a of FIG. 2A according to various embodiments of the disclosure. FIG. 5B is a cross-sectional view of an electronic device taken along line 5b-5b of FIG. 3A according to various embodiments of the disclosure.

In describing the electronic device 200 in FIGS. 5A and 5B, the same reference numerals are given to components that are substantially the same as those of the electronic device 200 in FIG. 4A, and a detailed description thereof may be omitted.

With reference to FIGS. 5A and 5B, the electronic device 200 may include a first housing 210 having a first space 2101, a second housing 220 having a second space 2201, a support member 240 connected to the second housing 220 and at least partially accommodated into the first space 2101 in a slide-in state, a flexible display 230 disposed to be supported by at least a part of the support member 240 and at least a part of the second housing 220, a rack gear 262 fixed to the first space 2101 and extending into the second space 2201, and a driving motor 260 disposed in the second space 2201 and including a pinion gear 261 gear-engaged with the rack gear 262. In an embodiment, through the gear engagement of the pinion gear 261 and the rack gear 262, the driving motor 260 can automatically move the second housing 220 in a slide-out direction (direction ①) or a slide-in direction (direction ②) with respect to the first housing 210. In some embodiment, by a change in the arrangement of the driving motor 260 and the rack gear 262, the first housing 210 may be automatically moved in a slide-out direction (direction ②) or a slide-in direction (direction ①) with respect to the second housing 220. In an embodiment, the first housing 210 may include a first lateral member 211, a first extension member 212 extending from the first lateral member 211, and a first rear cover 213 coupled with the first extension member 212. In an embodiment, the second housing 220 may include a second lateral member 221 and a second rear cover 223 coupled with a support plate 222 extending from the second lateral member 221.

According to various embodiments, in the slide-in state of the electronic device 200 (the state of FIG. 5A), a part of the second housing 220 may be accommodated in the first space 2101 of the first housing 210. In an embodiment, at least a part of the flexible display 230 may be accommodated into the first space 2101 together with the support member 240 in a manner of bending, thereby being disposed so as to be invisible from the outside. In this case, the flexible display 230 may have a first display area (e.g., a display area corresponding to the first portion 230a in FIG. 3a) exposed to the outside.

According to various embodiments, at least a part of the second housing 220 may transition to the slide-out state in which it is moved outwardly from the first housing 210 at least partially along the first direction (direction ①) by driving of the driving motor 260. In an embodiment, in the slide-out state of the electronic device 200 (the state of FIG. 5B), the flexible display 230 may be moved together with the support member 240 while being supported by the support bracket 225, so that its portion in the first space 2101 may be exposed so as to be at least partially visible from the outside. In this case, the flexible display 230 may be exposed to the outside with a second display area (e.g., a display area including the first portion 230a and the second portion 230b in FIG. 3A) that is expanded more than the first display area. In some embodiment, the rack gear 262 may be disposed in the second housing 220, and the driving motor 260 including the pinion gear 261 may be disposed in the first housing 210.

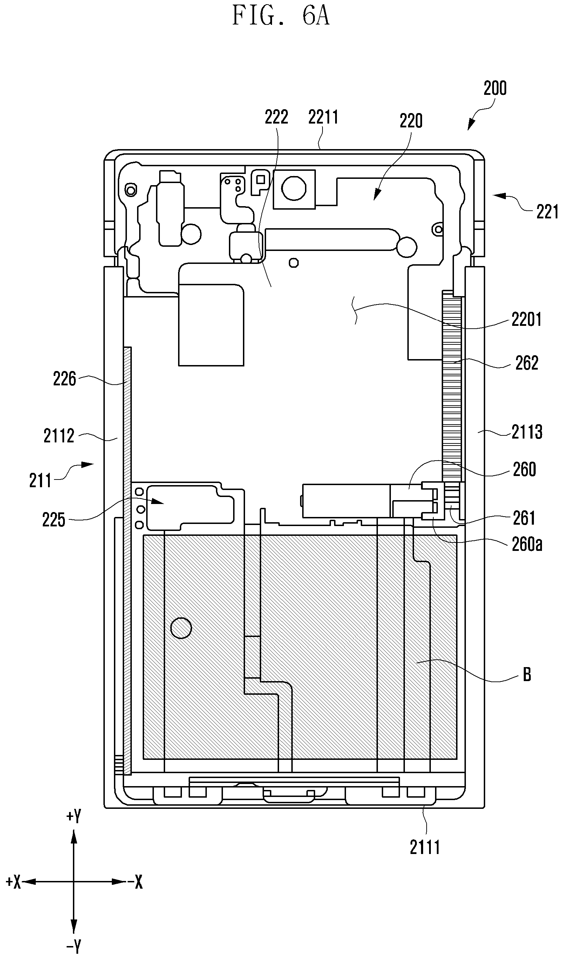

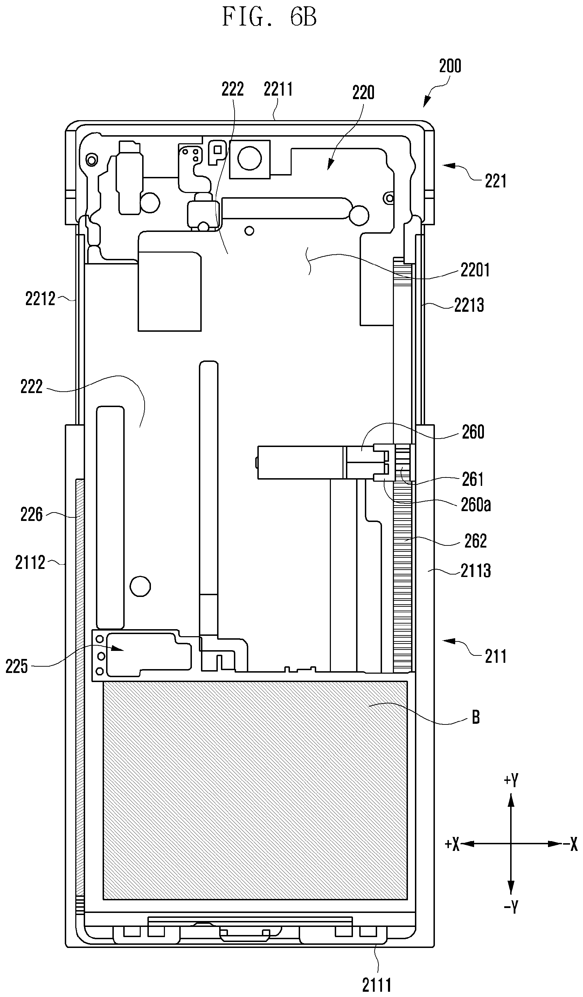

FIG. 6A is a diagram illustrating the rear surface of an electronic device in a slide-in state of the electronic device according to various embodiments of the disclosure. FIG. 6B is a diagram illustrating the rear surface of an electronic device in a slide-out state of the electronic device according to various embodiments of the disclosure.

With reference to FIGS. 6A and 6B, an electronic device 200 (e.g., the electronic device 200 in FIG. 4A) may include a second gear (e.g., the rack gear 262) that is fixed to at least a part (e.g., the support bracket 225 in FIG. 4A) of a first housing (e.g., the first housing 210 in FIG. 4A) and extends to a second housing (e.g., the second housing 220 in FIG. 4A), and a driving motor 260 that is disposed in the second housing 220 and includes a first gear (e.g., the pinion gear 261 in FIG. 5A) gear-engaged with the second gear (e.g., the rack gear 262). In an embodiment, the driving motor 260 may be disposed in a second space 2201 of the second housing 220.

With reference to FIGS. 6A to 9 hereinafter, the first gear (e.g., the pinion gear 261) may be the pinion gear 261 that is gear-engaged (e.g., connected or fastened) with the second gear (e.g., the rack gear 262), is connected to the driving motor 260, and rotates by receiving the driving force from the driving motor 260. With reference to FIGS. 6A to 9 hereinafter, the second gear (e.g., the rack gear 262) may refer to a structure that receives the driving force from the driving motor 260 and moves in a sliding direction (e.g., in the ±y-axis direction). For example, the second gear (e.g., the rack gear 262) may be the rack gear 262 (e.g., the rack gear 262 in FIGS. 6A to 9) that is gear-engaged with the pinion gear 261 of the driving motor 260 and moves in the sliding direction (e.g., in the ±y-axis direction). In FIGS. 6A to 9 hereinafter, the second gear will be described on the assumption that it is the rack gear 262. In addition, the first gear in FIGS. 6A to 9 will be described on the assumption that it is the pinion gear 261.

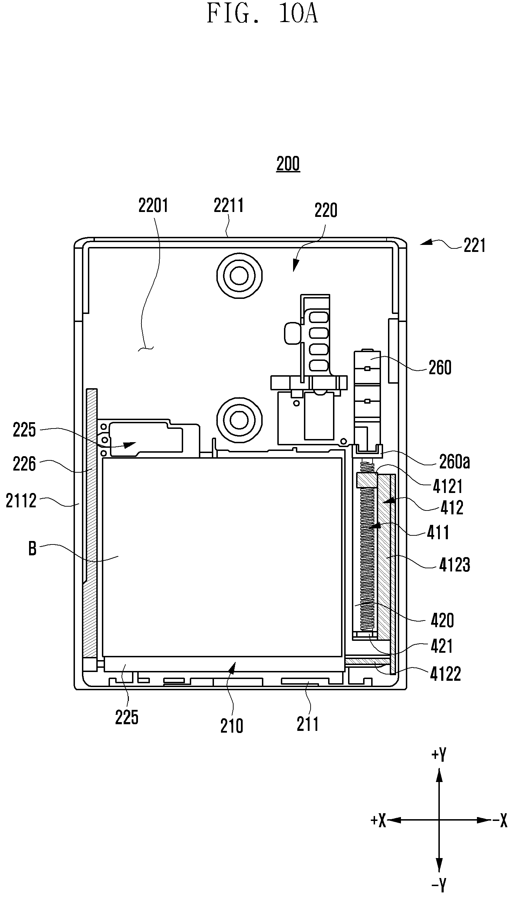

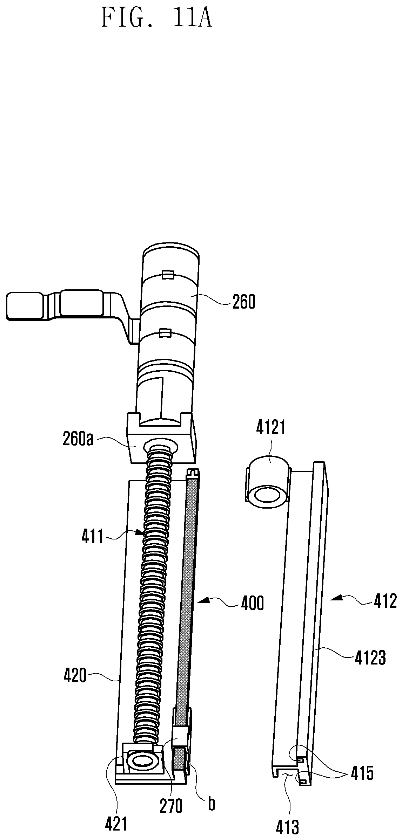

In an embodiment, with reference to FIGS. 10A to 12 to be described below, the second gear (e.g., a fastening structure (e.g., the fastening structure 412 in FIG. 11A)) may be connected (e.g., fastened) to the first gear (e.g., a screw member 411). The first gear (e.g., the screw member 411) may be the screw member 411 (e.g., a lead screw and/or an auger) that receives the driving force from the driving motor 260 and rotates around an axis of the driving motor 260. The second gear (e.g., the fastening structure 412) may move in the sliding direction (e.g., the ±y-axis direction) by being screw-engaged with the screw member 411 (e.g., a lead screw and/or an auger) that receives the driving force from the driving motor 260 and rotates around an axis of the driving motor 260. In FIGS. 10A to 12 to described below, the description will be based on the assumption that the second gear is the fastening structure 412 and the first gear is the screw member 411.

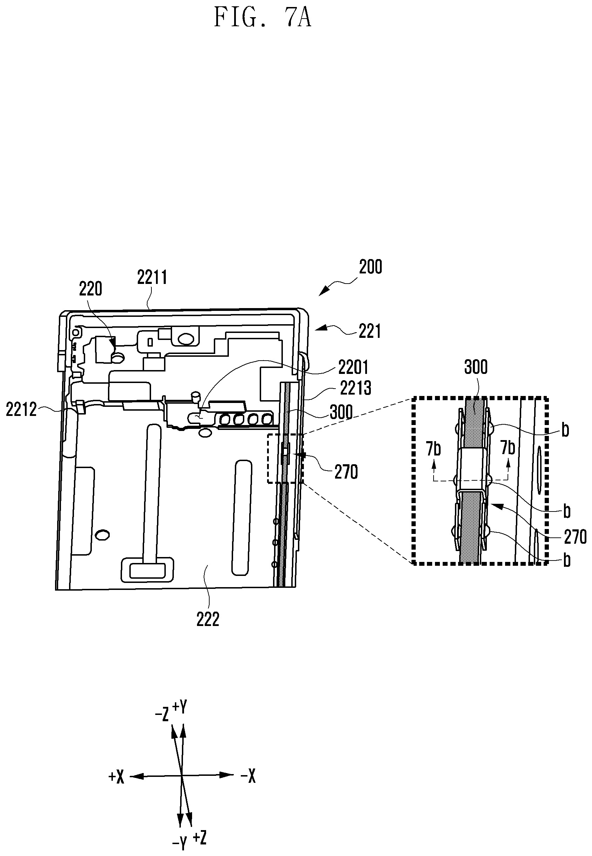

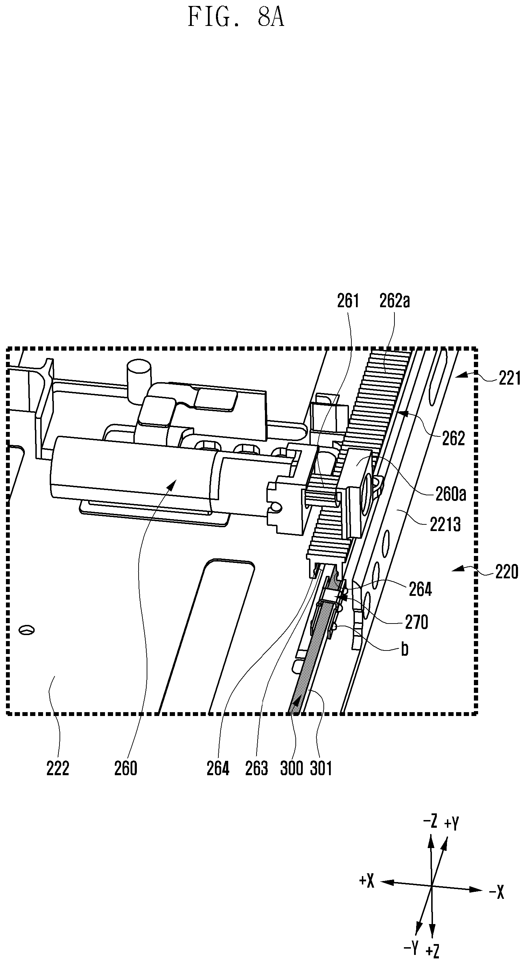

Additionally, in the embodiments of FIGS. 6A to 15 below, a first rail structure 227 fixed to the second housing 220 may be disposed only on one side of the second housing 220. For example, the first rail structure 227 disposed adjacent to the second gear (e.g., a rack gear 262, a fastening structure 412, or a guide member) may be omitted. In summary, the first rail structure 227 may be coupled to a fifth side 2212 of the second housing 220, and may not be coupled to a sixth side 2213. A support plate 222 of the second housing 220 may include a second rail structure (e.g., a rail, a guide block, the second rail structure 300 of FIG. 7A, and/or the second rail structure 400 of FIG. 11A). The second rail structure 300 may be integrally formed with the support plate 222 of the second side member 221, or separately formed and disposed on the support plate 222. In one embodiment, the second rail structure 300, 400 may be disposed on the periphery of the sixth side 2213 of the support plate 222 and may extend in the same direction as an extension direction of the first housing 210 with respect to the second housing 220. The second rail structure 300 may be formed to extend in the sliding direction of the electronic device 200 (e.g., a movement direction of the second housing 220 with respect to the first housing 210, or a movement direction of the first housing 210 with respect to the second housing 220). In one embodiment, the second gear 262, 412 may be at least partially coupled to the first housing 210. The second gear 262, 412 may be directly engaged with the first gear 261, 411, receive driving force through the first gear 261, 411, and move linearly (e.g., in the Y-axis direction of FIG. 6A) along the second rail structure 300, 400 (e.g., the second rail structure 300 of FIG. 8A, or the second rail structure 400 of FIG. 11A), thereby guiding movement of the first housing 210 with respect to the second housing 220. Accordingly, the first housing 210 may linearly move with respect to the second housing 220 based on the linear movement (e.g., Y-axis direction movement of FIG. 6A) of the sliding structure 226 with respect to the first rail structure 227 and the linear movement of the second gear 262 with respect to the second rail structure 300.

In an embodiment, with reference to FIGS. 8A to 8C to be described below, the rack gear 262 may have a recess 263 that accommodates the second rail structure 300. The rack gear 262 may be guided to move in the sliding direction (e.g., in the ±y-axis direction) through the second rail structure 300. Accordingly, the rack gear 262 receives the driving force of the driving motor 260 from the pinion gear 261 while being gear-engaged with the pinion gear 261 and moves along the second rail structure 300 in the sliding direction (e.g., in the ±y-axis direction), thereby moving the first housing 210 with respect to the second housing 220 in a slide-in direction (e.g., in the +y-axis direction) or a slide-out direction (e.g., in the -y-axis direction).

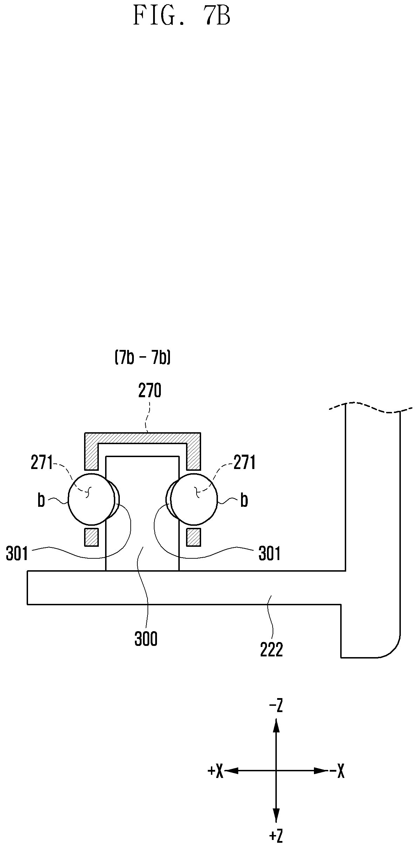

FIG. 7A is a diagram illustrating a bearing fixing member disposed on a first rail structure formed in a second housing according to various embodiments of the disclosure. FIG. 7B is a cross-sectional view taken along line 7b-7b of FIG. 7A.

According to various embodiments, as illustrated in FIGS. 7A and 7B, the electronic device 200 may include the second rail structure 300 (e.g., a rail, a first rail structure). In an embodiment, the second rail structure 300 may be at least partially disposed in the second space 2201 of the second housing 220. The second rail structure 300 may be disposed on the support plate 222 of the second lateral member 221 of the second housing 220. In an embodiment, the second rail structure 300 may be disposed adjacent to a side surface of the second housing 220. For example, the second rail structure 300 may be disposed adjacent to the sixth side surface 2213 of the second lateral member 221 of the second housing 220. In some embodiment, the second rail structure 300 may be disposed adjacent to the fifth side surface 2212 of the second lateral member 221.

In an embodiment, with reference to FIGS. 7A and 7B, the second rail structure 300 may be formed integrally with the support plate 222. In an embodiment, the second rail structure 300 may be formed separately from the support plate 222 and at least a part thereof may be disposed on the support plate 222. For example, the second rail structure 300 may be formed on a separate bracket disposed on the support plate 222.

According to various embodiments, as illustrated in FIG. 7B, the second rail structure 300 may include a first guide groove 301 (e.g., the first guide groove 301 in FIG. 8A) formed along the sliding direction (e.g., the ±y-axis direction) or the moving direction of the rack gear 262. In an embodiment, the first guide groove 301 may be formed on surfaces facing a first side surface 262b and a second side surface 262c of the rack gear 262, which will be described later. In an embodiment, a bearing member b (e.g., a bearing ball) that guides the sliding (e.g., moving) of the rack gear 262 with respect to the second rail structure 300 may be disposed in the first guide groove 301 of the second rail structure 300. In an embodiment, at least a part of the first guide groove 301 may be formed in a shape corresponding to the bearing member b. The bearing member b may be disposed between the rack gear 262 and the second rail structure 300 in the recess 263 of the rack gear 262 to guide the sliding of the rack gear 262 with respect to the second rail structure 300.

According to various embodiments, as illustrated in FIGS. 7A and 7B, the bearing member b may be disposed at a designated position (e.g., the first guide groove 301) of the second rail structure 300 via a bearing fixing member 270 (e.g., a movable member, a sliding member). The bearing fixing member 270 may prevent the bearing member b from being dislodged from the first guide groove 301 of the second rail structure 300. In an embodiment, the bearing fixing member 270 may have a hole 271 for accommodating the bearing member b. In an embodiment, the bearing fixing member 270 may be guided to slide relative to the second rail structure 300 via the bearing member b. In an embodiment, as will be described later, at least a part of the bearing fixing member 270 may be accommodated in the recess 263 of the rack gear 262. A second guide groove 264 (e.g., the second guide groove 264 in FIG. 8A) corresponding to the first guide groove 301 may be formed inside the recess 263 of the rack gear 262. In an embodiment, at least a part of the second guide groove 264 may be formed in a shape corresponding to the bearing member b. The bearing member b may be partially disposed in the second guide groove 264 while being disposed so as not to be separated from the first guide groove 301 through the bearing fixing member 270. Therefore, the rack gear 262 may move in the sliding direction with respect to the second rail structure 300 through the bearing member b.

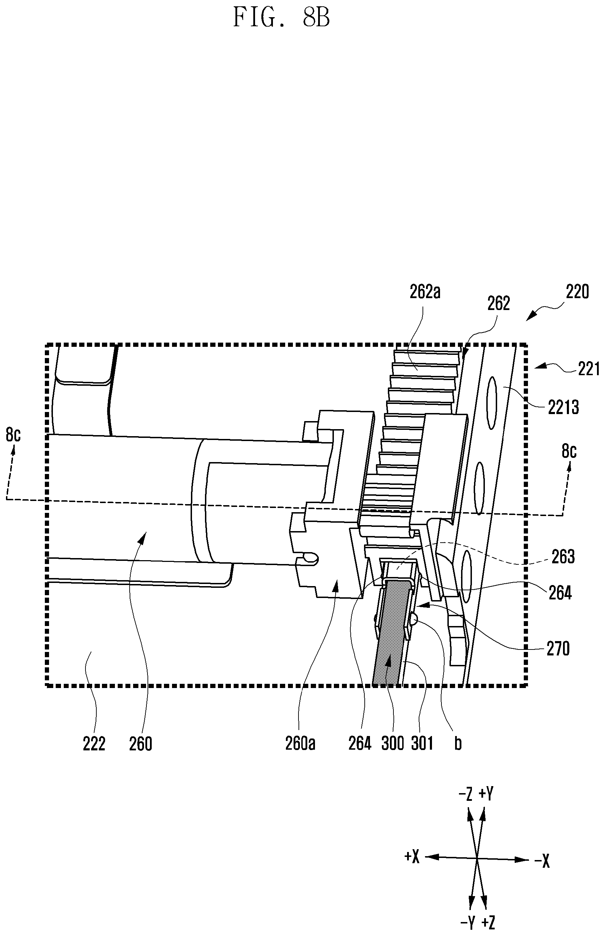

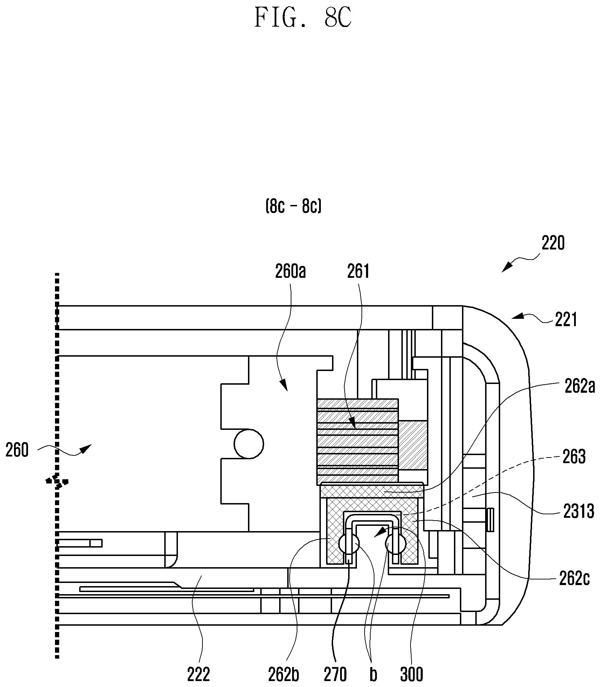

FIGS. 8A and 8B are diagrams illustrating the assembly relationship of a driving motor, a pinion gear, a rack gear, a bearing fixing member, and a first rail structure according to various embodiments of the disclosure. FIG. 8C is a cross-sectional view taken along line 8c-8c of FIG. 8B.

According to various embodiments, as illustrated in FIGS. 8A, 8B, and 8C, the rack gear 262 may have the recess 263 for accommodating the second rail structure 300. In an embodiment, the second rail structure 300 may be accommodated in the recess 263 of the rack gear 262 and surrounded by the rack gear 262. In an embodiment, a lubricant, such as grease, may be applied to the recess 263 of the rack gear 262. Therefore, friction caused by contact between the second rail structure 300 and the rack gear 262 may be reduced when the rack gear 262 moves relative to the second rail structure 300.

In an embodiment, the rack gear 262 may have a gear surface 262a on which teeth are formed to engage with the pinion gear 261(e.g., the first gear), a first side surface 262b and a second side surface 262c respectively extending from the gear surface 262a in opposite directions. The rack gear 262 may be directly engaged with the pinion gear 261, receive driving force through the pinion gear 261, and move linearly along the second rail structure 300 (e.g., in the Y-axis direction of FIG. 8A), so as to enable the first housing 210 to move with respect to the second housing (220).

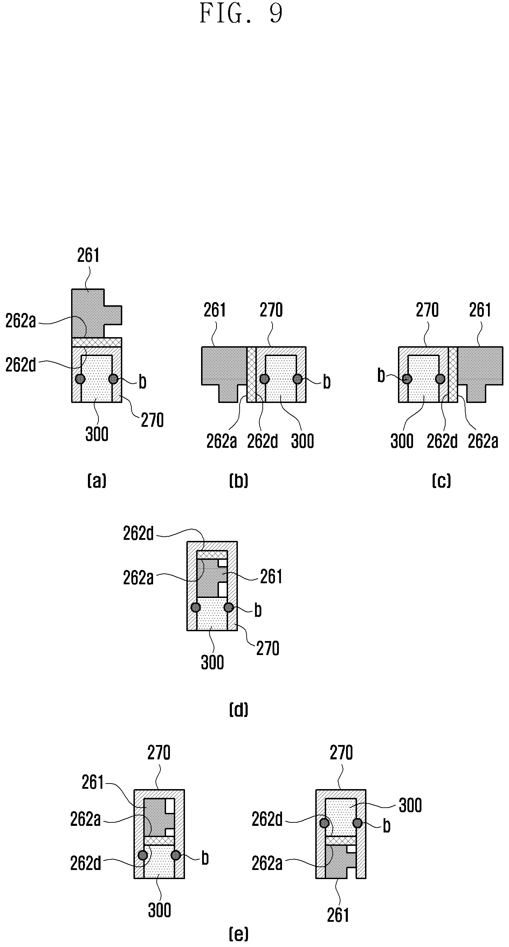

According to an embodiment, as illustrated in FIG. 8B, the rack gear 262 may be at least partially accommodated in a motor bracket 260a and disposed between the pinion gear 261 and the second rail structure 300. In an embodiment, the rack gear 262 may be disposed such that the gear surface 262a engages with the pinion gear 261 and a rear surface 262d (e.g., the rear surface 262d in FIG. 9) opposite to the gear surface 262a faces the second rail structure 300.

According to an embodiment, as illustrated in FIGS. 8A, 8B and 8C, the bearing member b may be disposed between the first side surface 262b of the rack gear 262 and the second rail structure 300 and/or between the second side surface 262c of the rack gear 262 and the second rail structure 300. In an embodiment, the rack gear 262 may have the second guide groove 264 corresponding to the first guide groove 301 of the second rail structure 300. In an embodiment, the second guide groove 264 may be located within the recess 263 of the rack gear 262. In an embodiment, the second guide groove 264 may be formed to face the first guide groove 301 on the first side surface 262b and/or the second side surface 262c of the rack gear 262. The bearing member b may be disposed between the first guide groove 301 and the second guide groove 264 to guide the movement of the rack gear 262 with respect to the second rail structure 300.

According to various embodiments, the driving motor 260 may be supported through the motor bracket 260a fixed to the second housing 220. In an embodiment, the rack gear 262 may be slidably coupled with the motor bracket 260a and gear-engaged with the pinion gear (e.g., the pinion gear 261 in FIG. 5A). For example, in the state of being coupled with and fixed to the support bracket 225 of the first housing 210 at one end, the rack gear 262 may receive the driving force from the driving motor 260 through the pinion gear 261 and move with respect to the driving motor 260 while being supported by the motor bracket 260a.

According to various embodiments, as illustrated in FIGS. 8A to 8C, the bearing fixing member 270 may be slidably disposed through the bearing member b on the second rail structure 300. In an embodiment, at least a part of the bearing fixing member 270 may be disposed inside the recess 263 of the rack gear 262. In some embodiment, a part of the bearing fixing member 270 may be exposed to the outside of the rack gear 262 depending on the position to which the rack gear 262 is moved. In an embodiment, when the rack gear 262 moves in the sliding direction (e.g., in the ±y-axis direction) by the driving force of the driving motor 260, the bearing fixing member 270 may move along the second rail structure 300 and guide the movement of the rack gear 262 with respect to the second rail structure 300.

In a comparative embodiment, first rail structures 227 (e.g., the first rail structures 227 of FIG. 4A) may be disposed on the sides of the second housing 220 (e.g., a fifth side 2212 and a sixth side 2213). According to one embodiment of the present disclosure, the first rail structure 227 disposed adjacent to the rack gear 262 may be omitted. For example, a first rail structure 227 may not be coupled to the sixth side 2213 of the second housing 220. In place of the omitted first rail structure 227, a second rail structure 300 may be disposed on a support plate 222 of the second housing 220. In one embodiment, referring to FIGS. 8A to 8C, the second rail structure 300 may be located below the rack gear 262 (e.g., in the +Z direction of FIG. 8A) and may be accommodated in a recess 263 of the rack gear 262. In this case, compared with a case in which the first rail structure 227 adjacent to the rack gear 262 is disposed on the side of the second housing 220, the embodiments of FIGS. 6A to 8C may secure additional space on both sides of the rack gear 262 corresponding to the placement space of the omitted first rail structure 227. Accordingly, the size of a battery B may be expanded by the space created through omission of the first rail structure 227 adjacent to the rack gear 262. As additional space for accommodating the battery B is secured, the size of the battery may be increased, thereby enhancing the capacity of the battery B.

Meanwhile, the electronic device 200 may include a sliding structure 226 disposed between the first housing 210 and the second housing 220. In an embodiment, the pair of sliding structure 226 may be disposed on the left and right sides of the electronic device 200 and guide both ends of the support member 240 supporting the flexible display 230 in the sliding direction. For example, the sliding structure 226 may be fixed to both sides of the support bracket 225 and disposed adjacent to the second and third side surfaces 2112 and 2113 of the first lateral member 211 of the first housing 210, respectively. In an embodiment, the sliding structure 226 adjacent to the rack gear 262 (e.g., the sliding structure 226 adjacent to the third side surface 2113 in FIG. 6A) has no first rail structure 227 inserted therein, so it may be formed to have a smaller thickness than that of the sliding structure 226 into which the first rail structure 227 is inserted (e.g., the sliding structure 226 adjacent to the second side surface 2112 in FIG. 6A). Therefore, the size of the battery B can be expanded by the amount of space created by the omission of the first rail structure 227 adjacent to the rack gear 262. As the space in which the battery B can be disposed is additionally secured, the size of the battery B can be increased, thereby increasing the capacity of the battery B. In the following description, it is assumed that the sliding structure 226 positioned adjacent to a third side 2113 of the first housing 210 is omitted. For example, the sliding structure 226 may be coupled to a portion of the support bracket 225 facing a second side 2112 of the first housing 210. The sliding structure 226 may not be coupled to a portion of the support bracket 225 adjacent to the third side 2113 of the first housing 210.

FIG. 9 is a diagram illustrating the arrangement relationship of a pinion gear, a rack gear, a bearing fixing member, and a second rail structure according to various embodiments of the disclosure.

According to various embodiments, as illustrated in FIG. 9, the pinion gear 261(e,g., the first gear), the rack gear 262(e.g., the second gear), the bearing fixing member 270, and the second rail structure 300 may have variously modified arrangement structures. In an embodiment, (a) of FIG. 9 is a diagram of a stacking relationship of the pinion gear 261, the rack gear 262, the bearing fixing member 270, and the second rail structure 300, as illustrated in FIGS. 8A to 8C described above. In an embodiment, with reference to (b) and (c) of FIG. 9, the rack gear 262 may be disposed on the bearing fixing member 270 so that the rear surface 262d faces the side surface of the second rail structure 300 where the first guide groove 301 is formed, and the gear portion 262a may be gear-engaged with the pinion gear 261. In an embodiment, as the rear surface 262d is fixed to the bearing fixing member 270, the rack gear 262 may be guided for movement relative to the second rail structure 300 through the bearing fixing member 270.

According to various embodiments, as illustrated in (d) and (e) of FIG. 9, the bearing fixing member 270 may accommodate the pinion gear 261, the rack gear 262, and the second rail structure 300. In an embodiment, with reference to (d) of FIG. 9, the rack gear 262, the pinion gear 261, and the second rail structure 300 may be arranged in that order. In an embodiment, the bearing fixing member 270 may be partially disposed on the rear surface 262d of the rack gear 262 to accommodate the rack gear 262, the pinion gear 261, and the second rail structure 300. In an embodiment, with reference to (e) of FIG. 9, the pinion gear 261, the rack gear 262, and the second rail structure 300 may be arranged in that order. In an embodiment, the bearing fixing member 270 may be disposed to accommodate the pinion gear 261, the rack gear 262, and the second rail structure 300.

Besides, the positions of the pinion gear 261, the rack gear 262, and the second rail structure 300 may be varied.

In the above description, it is assumed that the driving motor 260 is disposed in the second housing 220, the rack gear 262 is coupled with the support bracket 225 and disposed in at least a part of the second housing 220 in the slide-in or slide-out state of the electronic device 200, and the second rail structure 300 is disposed on the support plate 222 of the second housing 220, but it may not be limited thereto. In an embodiment, the arrangement positions of the driving motor 260, the rack gear 262, and/or the second rail structure 300 may be variously modified. In an embodiment, the driving motor 260, the pinion gear 261, and the motor bracket 260a may be disposed in the first space 2101 of the first housing 210. For example, the driving motor 260, the pinion gear 261, and the motor bracket 260a may be fixed to the first extension member 212 of the first housing 210. In this case, the rack gear 262 may be coupled with the second housing 220 and at least a part thereof may be disposed in the first housing 210, which is a counterpart of the second housing 220, in the slide-in or slide-out state of the electronic device 200. In an embodiment, the second rail structure 300 may be disposed on the first extension member 212 of the first housing 210. For example, the second rail structure 300 may be disposed on the first extension member 212 to be adjacent to the second or third side surface 2112 or 2113 of the first lateral member 211.

For convenience of explanation, in the following description, it is assumed that the driving motor 260, the pinion gear 261, and the motor bracket 260a are disposed in the second housing 220, the second gear (e.g., the rack gear 262, the fastening structure 412 in FIG. 11A) is coupled with the support bracket 225 of the first housing 210, and the second rail structure 300 is disposed on the support plate 222 of the second housing 220.

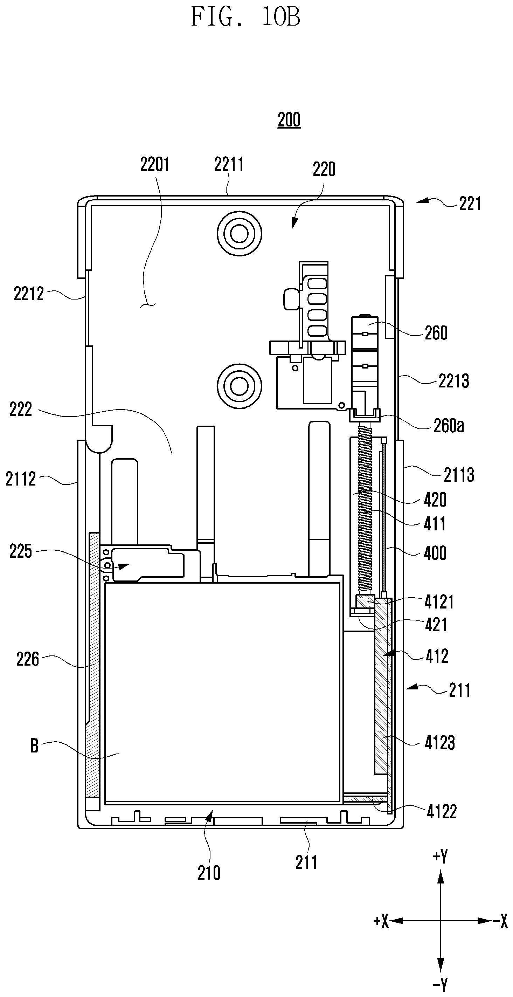

FIG. 10A is a diagram illustrating the rear surface of an electronic device in a slide-in state of the electronic device according to various embodiments of the disclosure. FIG. 10B is a diagram illustrating the rear surface of an electronic device in a slide-out state of the electronic device according to various embodiments of the disclosure.

According to various embodiments, as illustrated in FIGS. 10A and 10B, the electronic device (e.g., the electronic device 200 in FIGS. 4A and 10A) may include a second gear (e.g., the fastening structure 412 (e.g., a nut structure, a moving structure)) that is fixed to at least a part (e.g., the support bracket 225 in FIGS. 4A and 10A) of a first housing (e.g., the first housing 210 in FIGS. 4A and 10A) and extends to a second housing (e.g., the second housing 220 in FIGS. 4A and 10A), a first gear 411(e.g., screw member, a lead screw and/or an auger) that is at least partially disposed in the second housing 220 and screw-engaged with the fastening structure 412, and a driving motor 260 that provides a driving force to the first gear 411 to rotate the first gear 411. In an embodiment, the driving motor 260 and the motor bracket 260a may be disposed in the second space 2201 of the second housing 220.

In the following description, the first gear 411 will be described as a screw member 411, and the second gear 412 will be described as a fastening structure 412. The fastening structure 412 may be screw-coupled with the screw member 411. The fastening structure 412 may include a fastening portion 4121 (e.g., a nut structure, a nut member, and/or a nut) screw-coupled with the screw member 411. As the screw member 411 rotates through the motor 260, the fastening structure 412 may linearly move in a sliding direction (e.g., ±Y-axis direction) of the electronic device 200 with respect to the screw member 411, without rotating together with the screw member 411. For example, the fastening structure 412 may be at least partially coupled to the first housing 210, directly engaged with the screw member 411, receive driving force through the screw member 411, and move linearly (e.g., in the Y-axis direction of FIG. 10A) along the second rail structure 300 so as to allow the first housing 210 to move with respect to the second housing 220.

In a comparative embodiment, first rail structures 227 (e.g., the first rail structures 227 of FIG. 4A) may be disposed on the sides of the second housing 220 (e.g., a fifth side 2212 and a sixth side 2213). According to one embodiment of the present disclosure, the first rail structure 227 disposed adjacent to the fastening structure 412 may be omitted. For example, a first rail structure 227 may not be coupled to the sixth side 2213 of the second housing 220. In place of the omitted first rail structure 227, a second rail structure 400 may be disposed on a support plate 222 of the second housing 220. The second rail structure 400 may extend in a sliding direction (e.g., ±Y-axis direction) of the electronic device 200. The fastening structure 412 may include a recess 413 (e.g., the recess 413 of FIG. 11A) that accommodates the second rail structure 400. The fastening structure 412 may be guided to move in the sliding direction of the electronic device 200 through the second rail structure 400.Meanwhile, a sliding structure 226 may be disposed on a second side 2112 of the first housing 210, and a first rail structure 227 linearly coupled to the sliding structure 226 may be disposed on a fifth side 2212 of the second housing 220. Accordingly, the first housing 210 may linearly move with respect to the second housing 220 based on the linear movement (e.g., Y-axis direction movement of FIG. 10A) of the sliding structure 226 with respect to the first rail structure 227 and the linear movement of the fastening structure 412 with respect to the second rail structure 400.

According to various embodiments, as illustrated in FIGS. 10A and 10B, the electronic device 200 may include the second rail structure 400 (e.g., a rail, a first rail structure, and/or the second rail structure 300 in FIG. 7A). In an embodiment, the second rail structure 400 may be at least partially disposed in the second space 2201 of the second housing 220. The second rail structure 400 may be disposed on the support plate 222 of the second lateral member 221 of the second housing 220. In an embodiment, the second rail structure 300 may be disposed adjacent to the side surface of the second housing 220. For example, the second rail structure 300 may be disposed adjacent to the sixth side surface 2213 of the second lateral member 221 of the second housing 220. In some embodiment, the second rail structure 300 may be disposed adjacent to the fifth side surface 2212 of the second lateral member 221.

According to various embodiments, as illustrated in FIGS. 10A and 10B, the second rail structure 400 may be formed separately from the support plate 222 and at least a part thereof may be disposed on the support plate 222. For example, with reference to FIG. 11A, the second rail structure 400 may be formed on a bracket 420 that supports the screw member 411. In an embodiment, the bracket 420 may be disposed on the support plate 222 of the second lateral member 221. In this case, the second rail structure 400 may be disposed on the support plate 222 together with the bracket 420. In an embodiment, the second rail structure 400 may be formed integrally with the support plate 222 as a separate component from the bracket 420. For example, the bracket 420 and the second rail structure 400 may be disposed adjacent to each other on the support plate 222.

According to various embodiments, as illustrated in FIGS. 10A and 10B, the fastening structure 412 may be at least partially coupled with and fixed to the support bracket 225 of the first housing 210. For example, a coupling portion 4122 of the fastening structure 412 may be coupled with a side surface (e.g., a surface facing the -X direction in FIG. 10A) of the support bracket 225. Based on the movement of the fastening structure 412 along the screw member 411 in the sliding direction (e.g., the ±y-axis direction) of the electronic device 200, the first housing 210 may be moved in the slide-in direction (e.g., the +y-axis direction) or the slide-out direction (e.g., the -y-axis direction) with respect to the second housing 220.

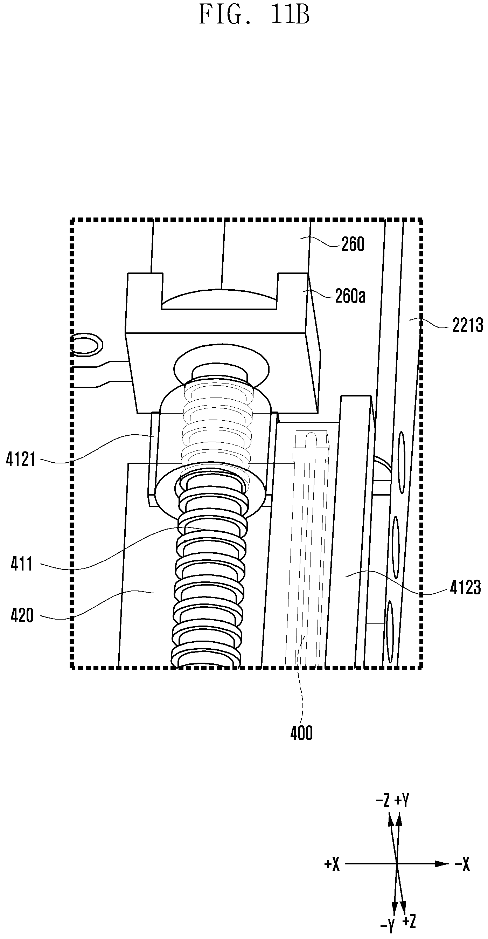

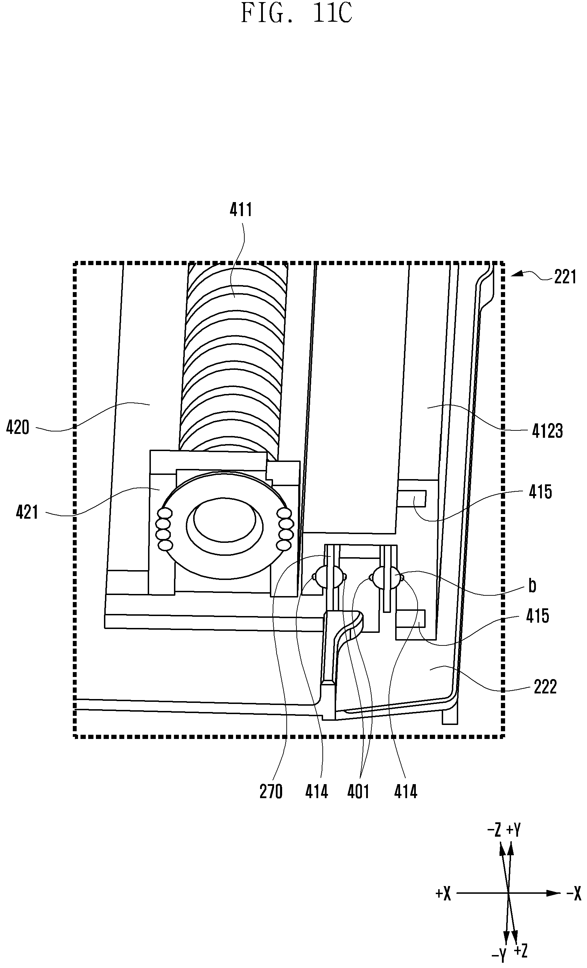

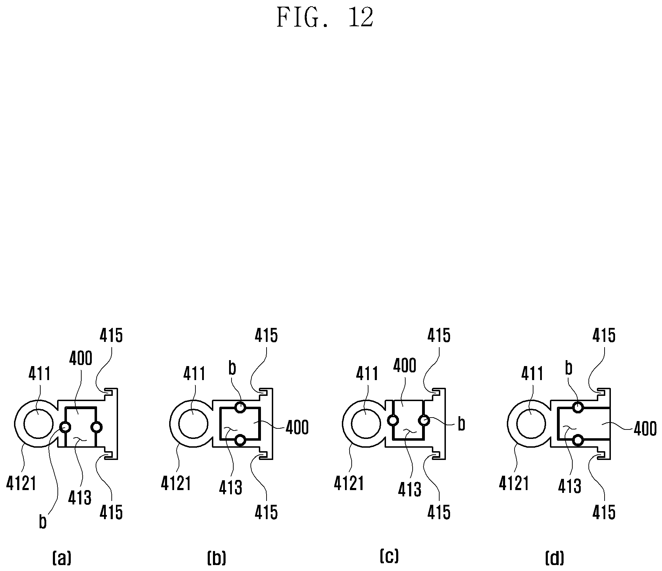

FIGS. 11A, 11B, and 11C are diagrams illustrating the arrangement relationship of a driving motor, a screw member, and a fastening structure according to various embodiments of the disclosure. FIG. 12 is a diagram illustrating the arrangement relationship of a screw member, a fastening structure, a bearing member, and a first rail structure according to various embodiments of the disclosure.

According to various embodiments, as illustrated in FIGS. 10A, 10B, and 11B, the fastening structure 412(e.g., second gear) may include a main body 4120 with a recess 413 formed, the fastening portion 4121 into which the screw member 411(e.g., first gear) is inserted, the coupling portion 4122 coupled with the support bracket 225, and a side portion 4123 (e.g., a main body portion) having a rail 415 into which one end of the support member 240 is inserted. The respective components of the fastening structure 412 may not be physically divided, but may be conceptually divided for convenience of explanation.

According to various embodiments, as illustrated in FIGS. 11A and 11B, the screw member 411 may be formed with a screw thread (e.g., a male thread). The fastening portion 4121 of the fastening structure 412 may be formed with a screw thread (e.g., a female thread) that engages with the screw thread of the screw member 411. In an embodiment, as the driving motor 260 rotates, the screw member 411 may rotate with respect to the fastening portion 4121 by engaging with the fastening portion 4121 of the fastening structure 412. The fastening structure 412 may move along the screw member 411 in the sliding direction (e.g., the ±y-axis direction) of the electronic device 200 without rotating together with the screw member 411 based on the rotation of the screw member 411. For example, whenever the screw member 411 rotates once, the fastening structure 412 may move in the sliding direction (e.g., the ±y-axis direction) relative to the screw member 411 by an amount corresponding to the pitch of the screw threads formed on the screw member 411.

According to various embodiments, as illustrated in FIGS. 11B and 11C, one end of the screw member 411 may be physically connected to the driving motor 260. The screw member 411 may sequentially pass through the motor bracket 260a and the fastening portion 4121 of the fastening structure 412 while its one end is connected to the driving motor 260. The bracket 420 may include a fixing portion 421 that supports the other end of the screw member 411. In an embodiment, the fixing portion 421 may have a hole into which the other end of the screw member 411 is inserted. As the other end of the screw member 411 rotates idly within the hole of the fixing portion 421, no force may be applied to the fixing portion 421 to move in the sliding direction (e.g., in the ±y-axis direction) with respect to the screw member 411.

According to various embodiments, as illustrated in FIG. 11C, the second rail structure 400 may have a first guide groove 401 formed along the sliding direction (e.g., the ±y-axis direction) or moving direction of the fastening structure 412. In an embodiment, the fastening structure 412 may have a second guide groove 414 that faces the first guide groove 401 and corresponds to the first guide groove 401. In an embodiment, the second guide groove 414 may be formed on a surface that is located inside the recess 413 and faces the surface of the second rail structure 400 on which the first guide groove 301 is formed. In an embodiment, a bearing member b (e.g., a bearing ball) may be disposed between the first guide groove 401 of the second rail structure 400 and the second guide groove 414 of the fastening structure 412 to guide the sliding (e.g., movement) of the fastening structure 412 with respect to the second rail structure 400. In an embodiment, the first guide groove 401 and the second guide groove 414 may be formed in a shape corresponding to the bearing member b at least in part. The bearing member b may be disposed between the fastening structure 412 and the second rail structure 400 in the recess 413 of the fastening structure 412 to guide the sliding of the fastening structure 412 with respect to the second rail structure 400.

According to various embodiments, as illustrated in FIGS. 11A and 11C, the bearing member b may be disposed at a designated position (e.g., the first guide groove 401) of the second rail structure 400 via a bearing fixing member 270 (e.g., a movable member, a sliding member). The bearing fixing member 270 may prevent the bearing member b from being dislodged from the first guide groove 401 of the second rail structure 400. In an embodiment, the bearing fixing member 270 may have a hole 271 (e.g., the hole 271 in FIG. 7B) for accommodating the bearing member b. In an embodiment, the bearing fixing member 270 may be guided to slide relative to the second rail structure 400 via the bearing member b. In an embodiment, at least a part of the bearing fixing member 270 may be accommodated in the recess 413 of the fastening structure 412. The bearing member b may be partially disposed in the second guide groove 414 while being disposed so as not to be dislodged from the first guide groove 401 through the bearing fixing member 270. Therefore, the fastening structure 412 may move in the sliding direction with respect to the second rail structure 400 through the bearing member b.

According to various embodiments, the bearing fixing member 270 may be slidably disposed on the second rail structure 400 through the bearing member b. In an embodiment, at least a part of the bearing fixing member 270 may be disposed inside the recess 413 of the fastening structure 412. In some embodiment, a part of the bearing fixing member 270 may be exposed to the outside of the fastening structure 412 depending on the position to which the fastening structure 412 is moved. In an embodiment, when the fastening structure 412 moves in the sliding direction (e.g., in the ±y-axis direction) relative to the second rail structure 400 through the screw member 411, the bearing fixing member 270 may move along the second rail structure 400 and guide the movement of the fastening structure 412 relative to the second rail structure 400.

In an embodiment, the second rail structure 400 may be accommodated in the recess 413 of the fastening structure 412 and surrounded by the fastening structure 412. In an embodiment, with reference to (a), (b), (c), and (d) of FIG. 12, the fastening structure 412 may accommodate the second rail structure 400 in various manners. In an embodiment, with reference to (a), (c), and (d) of FIG. 12, the fastening structure 412 may accommodate the second rail structure 400 with one side open. In an embodiment, with reference to (b) of FIG. 12, the fastening structure 412 may be formed in a shape of surrounding the second rail structure 400. In an embodiment, a lubricant such as grease may be applied to the recess 413 of the fastening structure 412. Therefore, when the fastening structure 412 moves relative to the second rail structure 400, friction caused by contact between the fastening structure 412 and the second rail structure 400 can be reduced.

According to various embodiments, as illustrated in FIGS. 11A and 11C, a rail 415 into which one end of a support member 240 supporting the flexible display 230 is inserted may be formed on a side portion 4123 of the fastening structure 412. Referring to FIGS. 10A and 10B described above, a sliding structure 226 may be fixed to one side surface of the support bracket 225 (e.g., a surface facing the +X direction of FIG. 10A) and may be disposed adjacent to a second side 2112 of a first side member 211 of the first housing 210.In one embodiment, the fastening structure 412 may be fixed to the other side surface of the support bracket 225 (e.g., a surface facing the -X direction of FIG. 10A) and may be disposed adjacent to a third side 2113 of the first side member 211 of the first housing 210. In one embodiment, the support member 240 may be guided in a sliding direction (e.g., ±Y-axis direction) by the sliding structure 226 at one end and guided in the sliding direction (e.g., ±Y-axis direction) by the rail 415 formed in the fastening structure 412 at the other end. In some embodiments, the fastening structure 412 may not include a rail 415 that supports the support member 240. In such a case, the sliding structure 226 may be fixed to both side surfaces of the support bracket 225 and disposed adjacent to the second side 2112 of the first side member 211 of the first housing 210. Accordingly, the support member 240 supporting the flexible display 230 may be inserted at one end into a rail (not shown) of the sliding structure 226 and at the other end into the rail 415 of the fastening structure 412, thereby moving based on a sliding operation of the electronic device 200.

In the above description, it is assumed that the driving motor 260 is disposed in the second housing 220, the fastening structure 412 is coupled with the support bracket 225 and disposed in at least a part of the second housing 220 in the slide-in or slide-out state of the electronic device 200, and the second rail structure 400 is disposed on the support plate 222 of the second housing 220, but it may not be limited thereto. In an embodiment, the arrangement positions of the driving motor 260, the rack gear 262, and/or the second rail structure 400 may be variously modified. In an embodiment, the driving motor 260 and the motor bracket 260a may be disposed in the first space 210 of the first housing 210. For example, the driving motor 260 and the motor bracket 260a may be fixed to the first extension member 212 of the first housing 210. In this case, the fastening structure 412 may be coupled with the second housing 220 and at least a part thereof may be disposed in the first housing 210, which is a counterpart of the second housing 220, in the slide-in or slide-out state of the electronic device 200. In an embodiment, the second rail structure 400 may be disposed on the first extension member 212 of the first housing 210. For example, the second rail structure 400 may be disposed on the first extension member 212 to be adjacent to the second or third side surface 2112 or 2113 of the first lateral member 211.

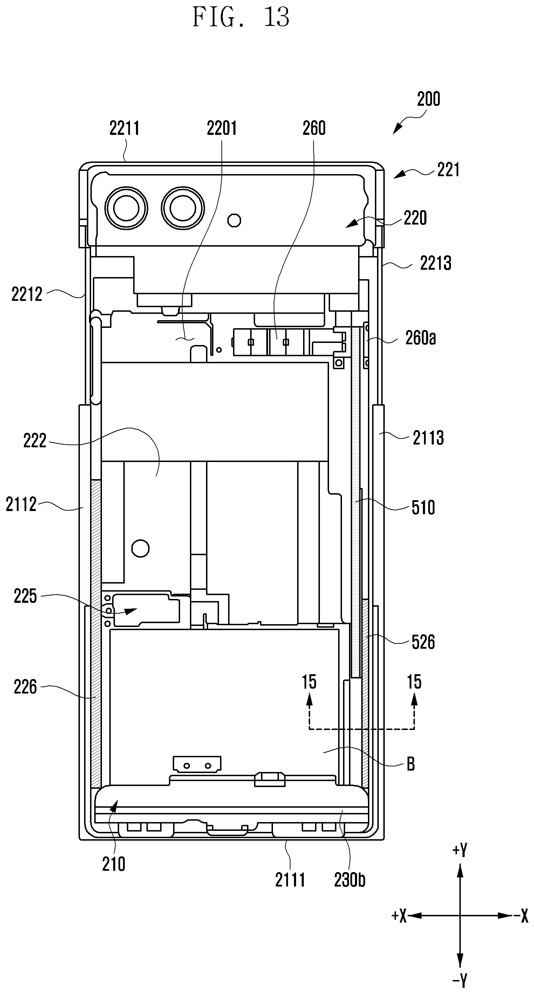

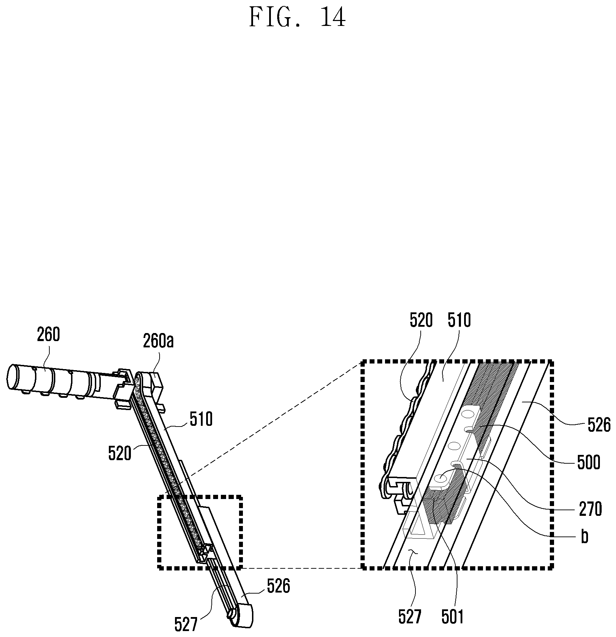

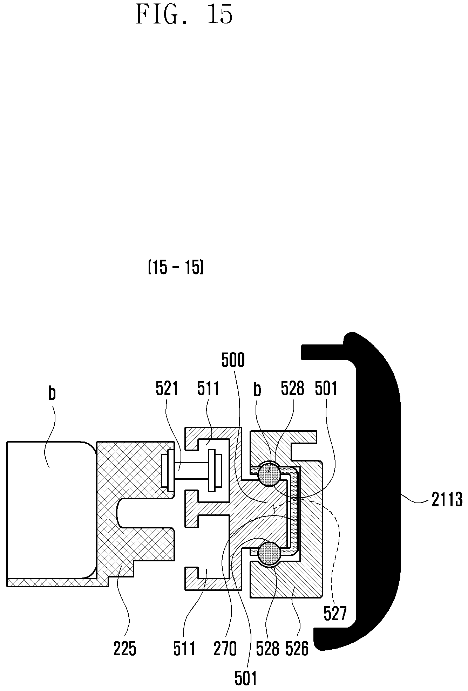

FIG. 13 is a diagram illustrating the rear surface of an electronic device in a slide-out state of the electronic device according to various embodiments of the disclosure. FIG. 14 is a diagram illustrating the coupling relationship of a chain member fastened to a pinion gear of a driving motor, a chain guide member guiding the chain member, and a sliding structure movably coupled with the chain guide member according to various embodiments of the disclosure. FIG. 15 is a cross-sectional view taken along line 15-15 of FIG. 13.

According to various embodiments, as illustrated in FIGS. 13, 14 and 15, an electronic device (e.g., the electronic device 200 in FIGS. 4A and 10A) may include a chain member 520 that is fixed to at least a part (e.g., the support bracket 225 in FIGS. 4A and 10A) of a first housing (e.g., the first housing 210 in FIGS. 4A and 10A), extends to a second housing (e.g., the second housing 220 in FIGS. 4A and 10A), and is engaged with the pinion gear 261 of the driving motor 260 disposed in the second space 2201 of the second housing 220. In an embodiment, the chain member 520 may move in the sliding direction (e.g., the ±y-axis direction) of the electronic device by engaging with the pinion gear 261. In an embodiment, a chain fixing portion 521 located at the end of the chain member 520 may be coupled with and fixed to the support bracket 225. Therefore, based on sliding of the chain member 520, the support bracket 225 may move in the slide-in direction (e.g., the +Y direction of FIG. 13) or the slide-out direction (e.g., the -Y direction of FIG. 13) relative to the second housing 220.

According to an embodiment, as shown in FIGS. 14 and 15, the chain member 520 may be disposed on a rail 511 formed in a chain guide member 510 and extending in the sliding direction, thereby being guided to move through the pinion gear 261. In an embodiment, the chain guide member 510 may be disposed to extend from the first housing 210 to the second housing 220.

In a comparative embodiment, first rail structures 227 (e.g., the first rail structures 227 of FIG. 4A) may be disposed on the sides of the second housing 220 (e.g., a fifth side 2212 and a sixth side 2213). According to one embodiment of the present disclosure, as illustrated in FIG. 13, the first rail structure 227 disposed adjacent to the rack gear 262 may be omitted. For example, the first rail structure 227 disposed adjacent to a chain guide member 510 may be omitted. In one embodiment, referring to FIGS. 14 and 15, the chain guide member 510 may include a second rail structure 500 (e.g., a rail, a guide block, and/or the second rail structure 300 of FIG. 7A, or the second rail structure 400 of FIG. 11A) that replaces the omitted first rail structure 227. The second rail structure 500 may extend in a sliding direction (e.g., ±Y-axis direction) of the electronic device 200. In one embodiment, the second rail structure 500 may extend from the first housing 210 to the second housing 220. In one embodiment, the second rail structure 500 may face a third side 2113 of the first housing 210. In some embodiments, when the chain guide member 510 faces a second side 2112 of the first housing 210, the second rail structure 500 may also face the second side 2112 of the first housing 210. In one embodiment, the second rail structure 500 may be accommodated, at least in part, in a recess 527 formed in a rail member 526 disposed on the first housing 210. In one embodiment, the rail member 526 may be coupled and fixed to the support bracket 225. In some embodiments, the rail member 526 may be coupled and fixed to the first side member 211. In one embodiment, based on the driving of the driving motor 260, a chain member 520 may move in the sliding direction along a rail 511 of the chain guide member 510. As the support bracket 225 is coupled to a chain fixing portion 521 located at the end of the chain member 520, the support bracket 225 may move in the sliding direction together with the chain member 520. Based on the movement of the support bracket 225, the first housing 210 may move in the sliding direction with respect to the second housing 220. The rail member 526, fixed to the support bracket 225 and/or the first side member 211 of the first housing 210, may move in the sliding direction with the first housing 210 with respect to the second housing 220. As the rail member 526 moves along the second rail structure 500 of the chain guide member 510, it may guide the movement of the first housing 210 with respect to the second housing 220. Meanwhile, a sliding structure 226 may be disposed on the second side 2112 of the first housing 210, and a first rail structure 227 linearly coupled to the sliding structure 226 may be disposed on the fifth side 2212 of the second housing 220. Accordingly, the first housing 210 may linearly move with respect to the second housing 220 based on the linear movement (e.g., Y-axis direction movement of FIG. 10A) of the sliding structure 226 with respect to the first rail structure 227 and the linear movement of the rail member 526 with respect to the second rail structure 500.

According to various embodiments, as illustrated in FIGS. 14 and 15, the second rail structure 500 may have a first guide groove 501 formed along the sliding direction (e.g., the ±y-axis direction) or moving direction of the electronic device 200. In an embodiment, the rail member 526 may have a second guide groove 528 that faces the first guide groove 501 and corresponds to the first guide groove 501. In an embodiment, the second guide groove 528 may be formed on a surface that is located inside the recess 527 and faces the surface of the second rail structure 500 where the first guide groove 501 is formed. In an embodiment, a bearing member b (e.g., a bearing ball) may be disposed between the first guide groove 501 of the second rail structure 500 and the second guide groove 528 of the rail member 526 to guide the sliding (e.g., movement) of the rail member 526 with respect to the second rail structure 500. In an embodiment, the first guide groove 501 and the second guide groove 528 may be formed in a shape corresponding to the bearing member b at least in part. The bearing member b may be disposed between the rail member 526 and the second rail structure 500 in the recess 527 of the rail member 526 to guide the sliding of the rail member 526 with respect to the second rail structure 500.

According to various embodiments, as illustrated in FIGS. 14 and 15, the bearing member b may be disposed at a designated position (e.g., the first guide groove 501) of the second rail structure 500 via the bearing fixing member 270 (e.g., a movable member, a sliding member). The bearing fixing member 270 may prevent the bearing member b from being dislodged from the first guide groove 501 of the second rail structure 500. The bearing fixing member 270 may slide on the second rail structure 500 via the bearing member b. In an embodiment, at least a part of the bearing fixing member 270 may be disposed inside the recess 527 of the rail member 526.

In an embodiment, a lubricant such as grease may be applied to the recess 527 of the rail member 526. Therefore, when the rail member 526 moves relative to the second rail structure 500, friction caused by contact between the rail member 526 and the second rail structure 500 can be reduced.

In a comparative embodiment, first rail structures 227 (e.g., the first rail structures 227 of FIG. 4A) may be disposed on the sides of the second housing 220 (e.g., a fifth side 2212 and a sixth side 2213). According to one embodiment of the present disclosure, the first rail structure 227 disposed adjacent to the chain guide member 510 may be omitted. For example, a first rail structure 227 may not be coupled to the sixth side 2213 of the second housing 220. In this case, compared with a case in which the first rail structure 227 adjacent to the chain guide member 510 is disposed on the side of the second housing 220, the embodiments of FIGS. 13 to 15 may secure additional space on both sides of the chain guide member 510 corresponding to the placement space of the omitted first rail structure 227. Accordingly, the size of a battery B may be expanded by the space created through omission of the first rail structure 227 adjacent to the chain guide member 510. As additional space for accommodating the battery B is secured, the size of the battery may be increased, thereby enhancing the capacity of the battery B.

According to an embodiment of the present disclosure, an electronic device (101, 200) may include a flexible display (230). The electronic device may include a first housing (210). The electronic device may include a second housing (220) including a support plate (222), a first side (2213) and a second side (2212) extending from both sides of the support plate (222). The electronic device may include a first rail structure (227) disposed on the first side of the second housing (220). The electronic device may include a sliding structure (226) fixed to the first housing (210), coupled with the first rail structure (227), and configured to move at least in part with respect to the first rail structure (227) in response to movement of the first housing (210) with respect to the second housing (220). The electronic device may include a second rail structure (300, 400) disposed on a periphery of the second side (2212) of the support plate (222) of the second housing (220) and extending in the same direction as a movement direction of the first housing (210) with respect to the second housing (220). The electronic device may include a driving unit including a driving motor (260) and a first gear (261, 411) connected to the driving motor and rotated by a driving force of the driving motor (260). The electronic device may include a recess (263, 413) accommodating the second rail structure (300, 400), and a second gear (262, 412) directly engaged with the first gear (261, 411), receiving a driving force through the first gear, and linearly moving along the second rail structure so that the first housing (210) moves with respect to the second housing (220). The electronic device may include a bearing member (b) at least partially disposed between the second rail structure (300, 400) and the recess (263, 413) of the second gear (262, 412).

In one embodiment, the driving unit may be disposed on the support plate (222) of the second housing (220). The second gear (262, 412) may be coupled and fixed at one end to the first housing (210).

In one embodiment, the second rail structure (300, 400) may be integrally formed with the support plate (222) of the second housing (220).

In one embodiment, the electronic device may include at least one hole (271) for accommodating the bearing member (b), and may further include a bearing fixing member (270) disposed on the second rail structure (300, 400).

In one embodiment, the bearing fixing member (270) may be at least partially accommodated in the recess of the second gear (262, 412).

In one embodiment, the recess (263, 413) may at least partially surround the second rail structure (300, 400).

In one embodiment, the first gear may include a pinion gear (261) rotated by the driving motor (260) and may be disposed in the second housing (220). The second gear may be a rack gear (262) including a gear surface (262a) having teeth engaged with the pinion gear (261).

In one embodiment, the rack gear (262) may include a first side (262b) and a second side (262c) respectively extending in opposite directions from the gear surface (262a). The bearing member (b) may be disposed between the first side (262b) and the second rail structure (300, 400) and between the second side (262c) and the second rail structure (300, 400).

In one embodiment, the second rail structure (300, 400) may include a first guide groove (301) formed along a moving direction of the rack gear (262), the first guide groove being formed on a surface facing each of the first side (262b) and the second side (262c). The rack gear (262) may include a second guide groove (264) formed on each of the first side (262b) and the second side (262c) and corresponding to the first guide groove (301). The bearing member (b) may be disposed between the first guide groove (301) and the second guide groove (264) to guide movement of the rack gear (262) with respect to the second rail structure (300, 400).

In one embodiment, the electronic device may include at least one hole (271) for accommodating the bearing member (b), and may further include a bearing fixing member (270) disposed on the second rail structure (300, 400). The rack gear (262) may have its rear surface (262d), opposite to the gear surface (262a), fixed to the bearing fixing member (270).

In one embodiment, the electronic device may further include a motor bracket (260a) disposed in the second housing (220) and supporting at least a portion of the driving motor (260) and the pinion gear (261). The rack gear (262) may be fixed to the first housing (210) and slidably coupled to the motor bracket (260a).

In one embodiment, the first gear may include a screw member (411). The second gear (412) may be a fastening structure including a fastening portion (4121) into which the screw member (411) is inserted and engaged, and configured to move along the second rail structure (400) based on rotation of the screw member (411).

In one embodiment, the electronic device may further include a bracket (420) including a fixing portion (421) into which an end of the screw member (411) is inserted, at least part of the bracket (420) being disposed in the second housing (220).

In one embodiment, the second rail structure (400) may be integrally formed with the bracket (420).

In one embodiment, the electronic device may further include a support member (240) supporting at least a portion of a surface of the flexible display (230). The fastening structure (412) may include a rail (415) configured to accommodate at least a portion of the support member (240) to guide movement of the support member (240).

In one embodiment, the second rail structure (400) may include a first guide groove (401) formed along a moving direction of the second gear (412). The fastening structure (412) may include a second guide groove (414) corresponding to the first guide groove (401) within the recess (413).

The bearing member (b) may be disposed between the first guide groove (401) and the second guide groove (414) to guide movement of the fastening structure (412) with respect to the second rail structure (400).

In one embodiment, the electronic device may further include a motor bracket (260a) accommodating at least a portion of the driving motor (260). The motor bracket (260a) may be coupled to a side member of the second housing (220).

In one embodiment, one of both sides of the first housing (210) may be guided in linear movement by the first rail structure (227) and the sliding structure (226), and the other side of the first housing (210) may be guided in linear movement by the second rail structure (400) and the second gear (412).

According to an embodiment of the present disclosure, an electronic device (101, 200) may include a flexible display (230). The electronic device may include a first housing (210). The electronic device may include a second housing (220) including a support plate (222), a first side (2213) and a second side (2212) extending from both sides of the support plate (222). The electronic device may include a first rail structure (227) disposed on the first side of the second housing (220). The electronic device may include a sliding structure (226) fixed to the first housing (210), coupled with the first rail structure (227), and configured to move at least in part with respect to the first rail structure (227) in response to movement of the first housing (210) with respect to the second housing (220). The electronic device may include a second rail structure (300, 400) disposed on a periphery of the second side (2212) of the support plate (222) of the second housing (220) and extending in the same direction as a movement direction of the first housing (210) with respect to the second housing (220). The electronic device may include a driving unit including a driving motor (260) and a pinion gear (261) connected to the driving motor and rotated by a driving force of the driving motor (260). The electronic device may include a recess (263) accommodating the second rail structure (300, 400), and a rack gear (262) fixed at one end to the first housing (210), engaged with the pinion gear (261), and driven thereby. The electronic device may include a bearing member (b) at least partially disposed between the second rail structure (300, 400) and the rack gear (262) within the recess (263).

According to an embodiment of the present disclosure, an electronic device (101, 200) may include a flexible display (230). The electronic device may include a first housing (210). The electronic device may include a second housing (220) including a support plate (222), a first side (2213) and a second side (2212) extending from both sides of the support plate (222). The electronic device may include a first rail structure (227) disposed on the first side of the second housing (220). The electronic device may include a sliding structure (226) fixed to the first housing (210), coupled with the first rail structure (227), and configured to move at least in part with respect to the first rail structure (227) in response to movement of the first housing (210) with respect to the second housing (220). The electronic device may include a second rail structure (400) disposed on a periphery of the second side (2212) of the support plate (222) of the second housing (220) and extending in the same direction as a movement direction of the first housing (210) with respect to the second housing (220). The electronic device may include a driving unit including a driving motor (260) and a screw member (411) connected to the driving motor and rotated by a driving force of the driving motor (260). The electronic device may include a recess (413) accommodating the second rail structure (400), and a fastening structure (412) including a fastening portion (4121) screw-coupled with the screw member (411) and configured to move along the second rail structure (400) based on rotation of the screw member (411). The electronic device may include a bearing member (b) at least partially disposed between the second rail structure (400) and the fastening structure (412) within the recess (413).

According to an embodiment of the disclosure, an electronic device 101, 200 may comprise: a flexible display 230; a first housing 210; a second housing 220 configured to move with respect to the first housing; a driving unit including a driving motor 260 attached to the first housing, and a rotating member 261, 411 connected to the driving motor and configured to be rotated by the driving motor; a rail structure 300, 400 extending in a same direction as a movement direction of the second housing with respect to the first housing; and a guide member 262, 412 including a recess 263, 413 accommodating the rail structure, the guide member being connected to the second housing and the rotating member and configured to move with respect to the driving motor through a driving force of the driving motor transmitted through the rotating member.

The electronic device may further comprise a bearing member disposed at least partially between the rail structure and the guide member in the recess. The rail structure may be attached to the first housing.

The flexible display may comprise a first portion adjacent to the rotating member, the first portion being substantially flat, and the rotating member may be arranged to rotate around an axis which is parallel to the first portion of the flexible display.

According to an embodiment of the disclosure, an electronic device 101, 200 may include: a flexible display 230; a first housing 210; a second housing 220 configured to move with respect to the first housing; a driving unit including a driving motor 260 disposed in one of the first housing and the second housing, and a rotating member 261, 411 connected to the driving motor and rotating configured to be rotated by the driving motor; a rail structure 300, 400 disposed in one of the first housing and the second housing and extending in a same direction as a movement direction of the second housing with respect to the first housing; and a guide member 262, 412 including a recess 263, 413 accommodating the rail structure, the guide member being connected to the rotating member and configured to move with respect to the driving motor through a driving force of the driving motor transmitted through the rotating member.

The electronic device may further comprise a bearing member disposed at least partially between the rail structure and the guide member in the recess.

The flexible display may comprise a first portion adjacent to the rotating member, the first portion being substantially flat, and the rotating member may be arranged to rotate around an axis which is parallel to the first portion of the flexible display.

The bearing member may be a member which is arranged to separate the rail structure and the guide member. The bearing member may be a member which is arranged to rotate with respect to the rail structure and the guide member as the guide member moves with respect to the rail structure. The bearing member may be a wheel. The bearing member may be a ball.

It may be that the rail structure is fixed to one of the first housing and the second housing, and the guide member is fixed to the other of the first housing and the second housing.

The flexible display may comprise a first portion adjacent to the rotating member, the first portion being substantially flat, and the rotating member may be arranged to rotate around an axis which is parallel to the first portion of the flexible display.

According to an embodiment of the disclosure, an electronic device 101, 200 may include: a flexible display 230; a first housing 210; a second housing 220 configured to move with respect to the first housing; a driving unit disposed in the second housing and including a pinion gear 261 and a driving motor 260; a rail structure 300 disposed in the second housing and extending in a same direction as a movement direction of the second housing with respect to the first housing; and a rack gear 262 including a recess 263 accommodating the rail structure, the rack gear being engaged with the pinion gear to drive.

The electronic device may further comprise a bearing member disposed at least partially between the rail structure and the rack gear in the recess.

The flexible display may comprise a first portion adjacent to the pinion gear, the first portion being substantially flat, and the pinion gear may be arranged to rotate around an axis which is parallel to the first portion of the flexible display.

The flexible display may comprise a first portion adjacent to the pinion gear, the first portion being substantially flat, and the pinion gear may be arranged to rotate around an axis which is parallel to the first portion of the flexible display.

According to an embodiment of the disclosure, an electronic device 101, 200 may include: a flexible display 230; a first housing 210; a second housing 220 configured to move with respect to the first housing; a driving unit including a driving motor 260 and a screw member 411 connected to the driving motor and rotating by the driving motor, the driving unit being disposed in the second housing; a rail structure 400 disposed in the second housing and extending in a same direction as a movement direction of the second housing with respect to the first housing; and a fastening structure 412 including a recess 413 accommodating the rail structure and a fastening portion 4121 screw-engaged with the screw member, the fastening structure moving along the rail structure based on a rotation of the screw member.

The electronic device may further comprise a bearing member disposed at least partially between the rail structure and the fastening structure in the recess.

The flexible display may comprise a first portion adjacent to the screw member, the first portion being substantially flat, and the screw member may be arranged to rotate around an axis which is parallel to the first portion of the flexible display.

The flexible display may comprise a first portion adjacent to the screw member, the first portion being substantially flat, and the screw member may be arranged to rotate around an axis which is parallel to the first portion of the flexible display.

Various embodiments of the disclosure and the terms used herein are not intended to limit the technological features set forth herein to particular embodiments and should be understood as including various changes, equivalents, or replacements for a corresponding embodiment. In relation to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). If a particular (e.g., first) element is referred to, with or without the term "operatively" or "communicatively", as "coupled" or "connected" to another (e.g., second) element, it means that the particular element may be connected to another element directly (e.g., wiredly), wirelessly, or via a third element.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be understood that the disclosure contemplates and includes, in addition to the embodiments disclosed above, embodiments based on any combination of two or more of the above embodiments, and embodiments including any combination of the above features. That is, the absence of an explicit indication that two features may be combined or that two embodiments may be combined does not mean that such a combination is not envisioned, but rather that such a combination is intended to be included herein.

## Claims

1. An electronic device 101, 200 comprising:
a flexible display 230;
a first housing 210;
a second housing 220 comprising a support plate 222, a first side 2213, and a second side 2212 extending from both sides of the support plate 222;
a first rail structure 227 disposed on the first side of the second housing 220;
a sliding structure 226 fixed to the first housing 210, coupled with the first rail structure 227, and configured to move, at least in portion, with respect to the first rail structure 227 in response to movement of the first housing 210 with respect to the second housing 220;
a second rail structure 300, 400 disposed on a periphery of the second side 2212 of the support plate 222 of the second housing 220 and extending in the same direction as a movement direction of the first housing 210 with respect to the second housing 220;
a driving unit comprising a driving motor 260 and a first gear 261, 411 connected to the driving motor 260 and rotated by a driving force of the driving motor 260;
a recess 263, 413 accommodating the second rail structure 300, 400;
a second gear 262, 412 directly engaged with the first gear 261, 411, receiving driving force through the first gear 261, 411, and moving linearly along the second rail structure 300, 400 so as to move the first housing 210 with respect to the second housing 220; and
a bearing member b disposed, at least in portion, between the second rail structure 300, 400 and the recess 263, 413 of the second gear 262, 412.

2. The electronic device of claim 1,
wherein the driving unit is disposed on the support plate 222 of the second housing 220, and
the second gear 262, 412 is fixed at one end to the first housing 210.

3. The electronic device of claim 2,
wherein the second rail structure 300, 400 is integrally formed with the support plate 222 of the second housing 220.

4. The electronic device of claim 1,
further comprising a bearing fixing member 270 disposed on the second rail structure 300, 400 and including at least one hole 271 for accommodating the bearing member b.

5. The electronic device of claim 4,
wherein the bearing fixing member 270 is at least partially accommodated in the recess of the second gear 262, 412.

6. The electronic device of claim 1,
wherein the recess 263, 413 surrounds at least a portion of the second rail structure 300, 400.

7. The electronic device of claim 1 or 2,
wherein the first gear 261 is a pinion gear 261 rotated by the driving motor 260 and disposed in the second housing 220, and
the second gear 262 includes a gear surface 262a having teeth engaged with the pinion gear 261, the second gear 262 being a rack gear 262.

8. The electronic device of claim 7,
wherein the rack gear 262 includes a first side 262b and a second side 262c extending in opposite directions from the gear surface 262a, and
the bearing member b is disposed between the first side 262b and the second rail structure 300, 400, and between the second side 262c and the second rail structure 300, 400.

9. The electronic device of claim 8,
wherein the second rail structure 300, 400 includes a first guide groove 301 formed along a movement direction of the rack gear 262 and facing the first side 262b and the second side 262c,
the rack gear 262 includes second guide grooves 264 respectively formed on the first side 262b and the second side 262c corresponding to the first guide groove 301, and
the bearing member b is disposed between the first guide groove 301 and the second guide groove 264 to guide movement of the rack gear 262 with respect to the second rail structure 300, 400.

10. The electronic device of claim 7,
further comprising a bearing fixing member 270 disposed on the second rail structure 300, 400 and including at least one hole 271 accommodating the bearing member b,
wherein a rear surface 262d opposite to the gear surface 262a of the rack gear 262 is fixed to the bearing fixing member 270.

11. The electronic device of claim 7,
further comprising a motor bracket 260a disposed in the second housing 220 and supporting at least a portion of the driving motor 260 and the pinion gear 261,
wherein the rack gear 262 is fixed to the first housing 210 and slidably coupled to the motor bracket 260a.

12. The electronic device of claim 1 or 2,
wherein the first gear 411 is a screw member 411, and
the second gear 412 is a fastening structure 412 including a fastening portion 4121 into which the screw member 411 is inserted and screw-coupled, the fastening structure 412 being configured to move along the second rail structure 300, 400 based on rotation of the screw member 411.

13. The electronic device of claim 12,
further comprising a bracket 420 disposed at least in portion on the second housing 220 and including a fixing portion 421 into which an end of the screw member 411 is inserted.

14. The electronic device of claim 12,
further comprising a support member 240 supporting at least a portion of a surface of the flexible display 230,
wherein the fastening structure 412 includes a rail 415 receiving at least a portion of the support member 240 to guide movement of the support member 240.

15. The electronic device of claim 12,
wherein the second rail structure 400 includes a first guide groove 401 formed along a movement direction of the second gear 412,
the fastening structure 412 includes a second guide groove 414 in the recess 413 corresponding to the first guide groove 401, and
the bearing member b is disposed between the first guide groove 401 and the second guide groove 414 to guide movement of the fastening structure 412 with respect to the second rail structure 400.
